(19) Europäisches Patentamt
European Patent Office
Office européen des brevets

(11) **EP 4 170 946 A1**

## (12) EUROPEAN PATENT APPLICATION

(43) Date of publication:
**26.04.2023 Bulletin 2023/17**

(21) Application number: **21204297.2**

(22) Date of filing: **22.10.2021**

(51) International Patent Classification (IPC):
**H04L 1/08** (2006.01)   **H04L 5/00** (2006.01)

(52) Cooperative Patent Classification (CPC):
**H04L 1/08; H04L 1/001; H04L 1/0072; H04L 5/0053; H04L 5/001**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Panasonic Intellectual Property Corporation of America**
**Torrance, CA 90504 (US)**

(72) Inventors:
• **SHARIATMADARI, Hamidreza**
**63225 Langen (DE)**
• **SUZUKI, Hidetoshi**
**Osaka, 571-8501 (JP)**

(74) Representative: **Grünecker Patent- und Rechtsanwälte**
**PartG mbB**
**Leopoldstraße 4**
**80802 München (DE)**

(54) **USER EQUIPMENT AND BASE STATION INVOLVED IN TRANSMISSION OF UPLINK CONTROL INFORMATION**

(57) The present disclosure relates to a user equipment, UE, comprising the following. A processing circuitry of the UE determines a target effective number of transmission repetitions for uplink control information, UCI. A transmitter performs one or more transmission repetitions for the available UCI until the target effective number of UCI transmission repetitions is reached. For each transmission repetition,
• the processing circuitry determines one component carrier of a plurality of component carriers configured for the UE and determines an uplink resource of the determined component carrier, and
• the transmitter transmits the available uplink control information using the determined uplink resource of the determined component carrier.

Each performed UCI transmission repetitions contributes with an individual effective number towards the target effective number of UCI transmission repetitions, the effective number of each UCI transmission repetition depends on a transmission-effectivity coefficient relating to the component carrier used for performing the respective UCI transmission repetition.

Fig. 12

**Description**

**FIELD OF THE PRESENT DISCLOSURE**

The present disclosure is directed to methods, devices and articles in communication systems, such as 3GPP communication systems.

**TECHNICAL BACKGROUND**

Currently, the 3rd Generation Partnership Project (3GPP) works at the technical specifications for the next generation cellular technology, which is also called fifth generation (5G).

One objective is to provide a single technical framework addressing all usage scenarios, requirements and deployment scenarios (see e.g. section 6 of 3GGP TR 38.913 version 16.0.0), at least including enhanced mobile broadband (eMBB), ultra-reliable low-latency communications (URLLC), and massive machine type communication (mMTC). For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC deployment scenarios may include scenarios with large number of devices with non-time critical data transfers such as smart wearables and sensor networks. The services eMBB and URLLC are similar in that they both demand a very broad bandwidth, however are different in that the URLLC service may preferably require ultra-low latencies.

A second objective is to achieve forward compatibility. Backward compatibility to Long Term Evolution (LTE, LTE-A) cellular systems is not required, which facilitates a completely new system design and/or the introduction of novel features.

**SUMMARY**

One non-limiting and exemplary embodiment facilitates providing procedures for a UE to perform an improved uplink control information transmission procedure.

In an embodiment, the techniques disclosed here feature a user equipment, UE, comprising the following. A processing circuitry of the UE determines a target effective number of transmission repetitions for uplink control information, UCI, that is available for transmission. A transmitter of the UE performs one or more transmission repetitions for the available uplink control information until the target effective number of UCI transmission repetitions is reached. For each transmission repetition of the available uplink control information,

- the processing circuitry determines one component carrier of a plurality of component carriers configured for the UE and determines an uplink resource of the determined component carrier, and
- the transmitter transmits the available uplink control information using the determined uplink resource of the determined component carrier.

Each of the performed UCI transmission repetitions contributes with an individual effective number towards the target effective number of UCI transmission repetitions, the effective number of each UCI transmission repetition depends on a transmission-effectivity coefficient relating to the component carrier used for performing the respective UCI transmission repetition.

It should be noted that general or specific embodiments may be implemented as a system, a method, an integrated circuit, a computer program, a storage medium, or any selective combination thereof. For instance, an integrated circuit can control a process of a UE or base station.

Additional benefits and advantages of the disclosed embodiments and different implementations will be apparent from the specification and figures. The benefits and/or advantages may be individually obtained by the various embodiments and features of the specification and drawings, which need not all be provided in order to obtain one or more of such benefits and/or advantages.

**BRIEF DESCRIPTION OF THE FIGURES**

In the following exemplary embodiments are described in more detail with reference to the attached figures and drawings.

Fig. 1          shows an exemplary architecture for a 3GPP NR system;
Fig. 2          is a schematic drawing that shows a functional split between NG-RAN and 5GC,

| | |
|---|---|
| Fig. 3 | is a sequence diagram for RRC connection setup/reconfiguration procedures, |
| Fig. 4 | is a schematic drawing showing usage scenarios of Enhanced mobile broadband (eMBB), Massive Machine Type Communications (mMTC) and Ultra Reliable and Low Latency Communications (URLLC), |
| Fig. 5 | is a block diagram showing an exemplary 5G system architecture for a non-roaming scenario, |
| Fig. 6 | illustrates the relationship between Bandwidth Parts, Control Resource Sets (CORESETS), search spaces, search space sets, and PDCCH candidates, |
| Fig. 7 | illustrates an exemplary time-domain structure in a communication system, such as 5G NR, including radio frames, subframes, slots, and OFDM symbols for different subcarrier spacings, |
| Fig. 8 | illustrates a simplified and exemplary implementation of the PUCCH repetition functionality, |
| Fig. 9 | illustrates a simplified and exemplary implementation of the PUCCH carrier switching functionality, |
| Fig. 10 | an exemplary and simplified structure of a UE and gNB, |
| Fig. 11 | illustrates a structure of the UE according to an exemplary implementation of an improved UCI transmission procedure, |
| Fig. 12 | is a flow diagram for the UE behavior, according to an exemplary implementation of the improved UCI transmission procedure, |
| Fig. 13 | illustrates a structure of the base station according to an exemplary implementation of an improved UCI transmission procedure, |
| Fig. 14 | is a flow diagram for the base station behavior that participates in an exemplary implementation of the improved UCI transmission procedure, |
| Fig. 15 | is a signaling diagram illustrating an exemplary exchange between the UE and the gNB for an exemplary implementation of the improved UCI transmission procedure, |
| Fig. 16 | illustrates the joint operation of uplink transmission repetition and uplink carrier switching, according to an exemplary implementation of the improved UCI transmission procedure, specifically for an SPS-configured PDSCH transmission, |
| Fig. 17 | illustrates the joint operation of uplink transmission repetition and uplink carrier switching, according to another exemplary implementation of the improved UCI transmission procedure, specifically for a DCI-scheduled PDSCH transmission, |
| Fig. 18 | illustrates the joint operation of uplink transmission repetition and uplink carrier switching, according to an exemplary implementation of the improved UCI transmission procedure, specifically including one variant of an uplink resource determination, |
| Fig. 19 | illustrates the joint operation of uplink transmission repetition and uplink carrier switching, according to an exemplary implementation of the improved UCI transmission procedure, specifically including an implementation of an improved uplink resource determination, |
| Fig. 20 and 21 | illustrate the joint operation of uplink transmission repetition and uplink carrier switching, according to an exemplary implementation of the improved UCI |
| Fig. 22 | transmission procedure, specifically including further implementations of an improved uplink resource determination, and illustrates a further aspect according to another aspect of the present disclosure. |

## DETAILED DESCRIPTION

*5G NR system architecture and protocol stacks*

3GPP has been working at the next release for the 5th generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of smartphones.

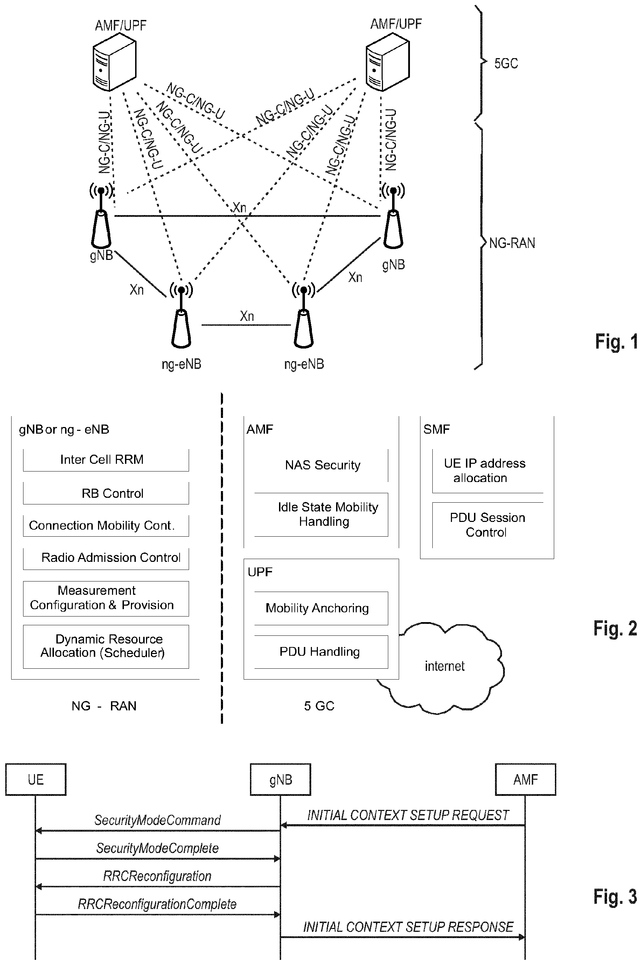

Among other things, the overall system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v16.6.0, section 4).

The user plane protocol stack for NR (see e.g. 3GPP TS 38.300, section 4.4.1) comprises the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SDAP, Service Data Adaptation Protocol) is introduced above PDCP (see e.g. sub-clause 6.5 of TS 38.300). A control plane protocol stack is also defined for NR (see for instance TS 38.300, section 4.4.2). An overview of the Layer 2 functions is given in sub-clause 6 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability ($1-10^{-5}$ within 1ms). Finally, mMTC may preferably require high connection density (1,000,000 devices/km$^2$ in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15 kHz, 30 kHz, 60 kHz... are being considered at the moment. The symbol duration $T_u$ and the subcarrier spacing $\Delta f$ are directly related through the formula $\Delta f = 1 / T_u$. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v16.6.0, e.g. section 4). For instance, downlink and uplink transmissions are organized into frames with 10ms duration, each frame consisting of ten subframes of respectively 1ms duration. In 5g NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

*5G NR functional split between NG-RAN and 5GC*

**Fig. 2** illustrates functional split between NG-RAN and 5GC. NG-RAN logical node is a gNB or ng-eNB. The 5GC has logical nodes AMF, UPF and SMF.

In particular, the gNB and ng-eNB host the following main functions:

- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from the AMF or OAM);

- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:

- Non-Access Stratum, NAS, signalling termination;
- NAS signalling security;
- Access Stratum, AS, Security control;
- Inter Core Network, CN, node signalling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:

- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g. packet filtering, gating, UL/DL rate enforcement;
- Uplink Traffic verification (SDF to QoS flow mapping);
- Downlink packet buffering and downlink data notification triggering.

Finally, the Session Management function, SMF, hosts the following main functions:

- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

*RRC connection setup and reconfiguration procedures*

**Fig. 3** illustrates some interactions between a UE, gNB, and AMF (a 5GC entity) in the context of a transition of the UE from RRC_IDLE to RRC_CONNECTED for the NAS part (see TS 38.300).
RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a Security-ModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signallingonly connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element (IE) to the UE via the signaling radio bearer. The UE then performs an uplink transmission or a downlink reception based on the resource allocation configuration.

*Usage Scenarios of IMT for 2020 and beyond*

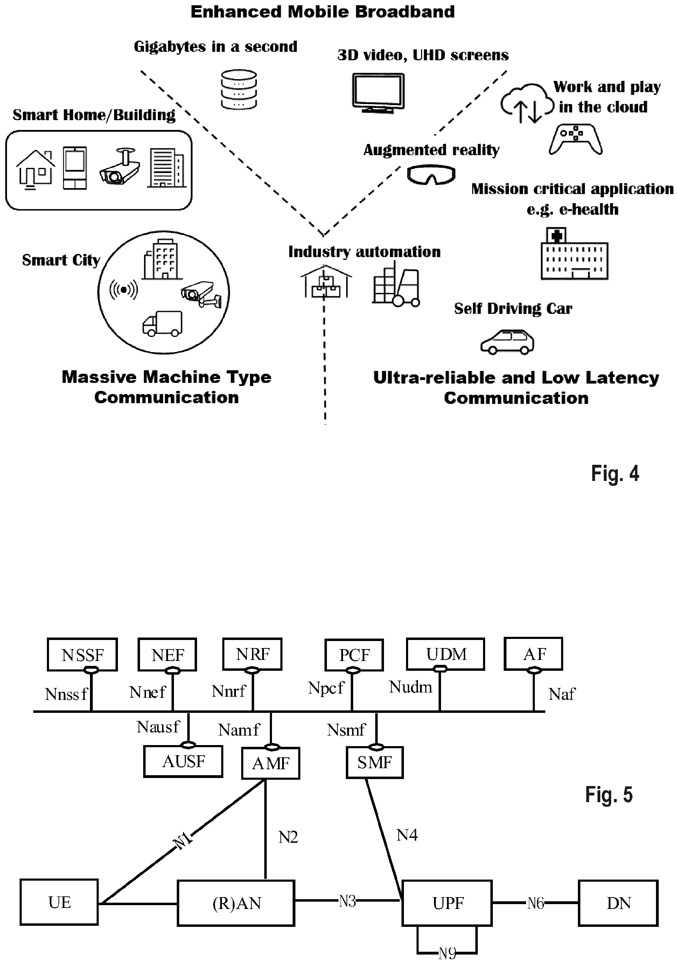

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g. ITU-R M.20183 Fig. 2).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by TR 38.913 version 16.0.0. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to $10^6$ level), higher availability, packet sizes of up to 256 bytes, time synchronization down to the order of a few $\mu$s where the value can be one or a few $\mu$s depending on frequency range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also, PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

*QoS control*

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

Fig. 5 illustrates a 5G NR non-roaming reference architecture (see e.g. 3GPP TS 23.501 v16.9.0 or v17.1.1, section 4.2.3). An Application Function (AF), e.g. an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g. QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

Fig. 5 shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g. operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMBB and mMTC services to at least one of functions (for example NEF, AMF, SMF, PCF,UPF, etc.) of the 5GC to establish a PDU session including a radio bearer between a gNodeB and a UE in accordance with the QoS requirement and control circuitry, which, in operation, performs the services using the established PDU session.

*Bandwidth Parts*

NR systems will support much wider maximum channel bandwidths than LTE's 20 MHz bandwidth (e.g. 100 MHz). Wideband communication is also supported in LTE via carrier aggregation (CA) of up to 20-MHz component carriers. By defining wider channel bandwidths in NR, it is possible to dynamically allocate frequency resources via scheduling, which can be more efficient and flexible than the Carrier Aggregation operation of LTE, whose activation/deactivation is based on MAC Control Elements. Having a single wideband carrier also has merit in terms of low control overhead, as it needs only a single control signaling (Carrier Aggregation requires separate control signaling per each aggregated carrier).

Moreover, like LTE, NR may also support the aggregation of multiple carriers via carrier aggregation or dual connectivity.

Since UEs are not always demanding high data rates, the use of a wide bandwidth may incur higher idling power consumption both from RF and baseband signal processing perspectives. In this regard, a newly developed concept of bandwidth parts for NR provides a means of operating UEs with smaller bandwidths than the configured channel bandwidth, so as to provide an energyefficient solution despite the support of wideband operation. Any low-end terminal, which cannot access the whole bandwidth for NR, can benefit therefrom.

A bandwidth part (BWP) is a subset of the total cell bandwidth of a cell, e.g. defined by the location and number of contiguous physical resource blocks (PRBs). It may be defined separately for uplink and downlink. Furthermore, each bandwidth part can be associated with a specific OFDM numerology, e.g. with a subcarrier spacing and cyclic prefix. For instance, bandwidth adaptation is achieved by configuring the UE with BWP(s) and by telling the UE which of the configured BWPs is currently the active one.

Exemplarily, in 5G NR, a specific BWP is configured only for a UE in RRC_Connected state. For instance, other than an initial BWP (e.g. respectively one for UL and one for DL), a BWP only exists for UEs in connected state. To support the initial data exchange between the UE and the network, e.g. during the process of moving a UE from RRC_IDLE or RRC_INACTIVE state to RRC_CONNECTED state, the initial DL BWP and initial UL BWP are configured in the minimum system information.

Although the UE can be configured with more than one BWP (e.g. up to 4 BWP per serving cell, as currently defined for NR), the UE has only one active DL BWP at a time. Switching between configured BWPs may be achieved for instance by means of downlink control information (DCIs).

For the Primary Cell (PCell), the initial BWP is the BWP used for initial access, and the default BWP is the initial one unless another initial BWP is explicitly configured. For a Secondary Cell (SCell), the initial BWP is always explicitly configured, and a default BWP may also be configured. When a default BWP is configured for a serving cell, the expiry of an inactivity timer associated to that cell switches the active BWP to the default one.

Some DCI formats do not contain the BWP ID (such as Formats 0_0 and 1_0), while in other DCI formats the number of bits for BWP ID is RRC-configurable and could be 0, 1, 2 bits (such as for Formats 0_1, 0_2, 1_1, and 1_2).

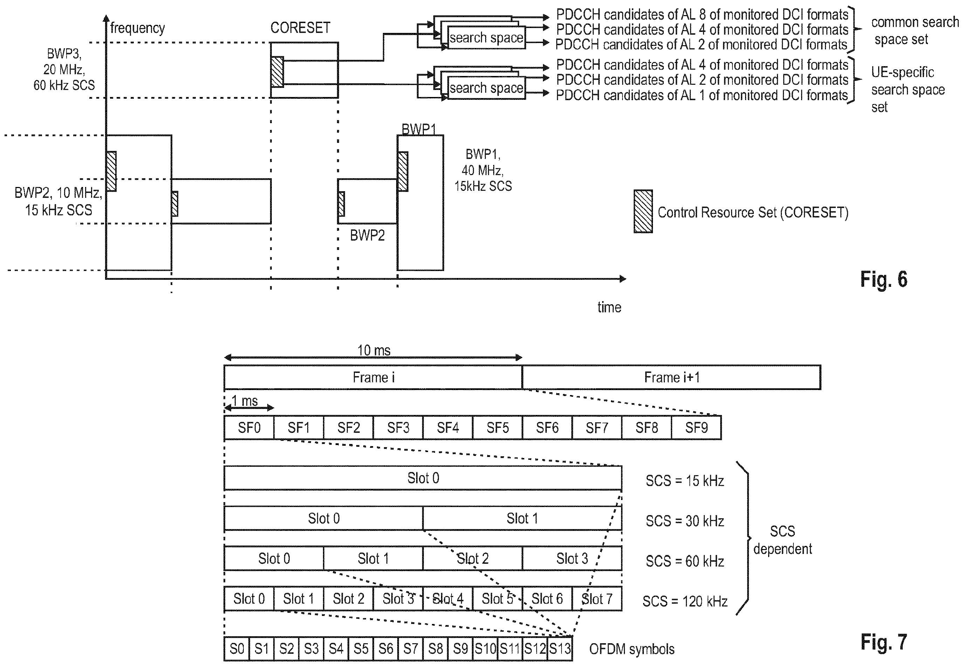

Fig. 6 illustrates a scenario where three different BWPs are configured, BWP1 with a frequency bandwidth of 40 MHz and a subcarrier spacing of 15 kHz, BWP2 with a width of 10 MHz and a subcarrier spacing of 15 kHz, and BWP3 with a width of 20 MHz and subcarrier spacing of 60 kHz.

*Control information - Search space sets*

PDCCH monitoring is done by the UE so as to identify and receive information intended for the UE, such as the control information as well as the user traffic (e.g. the DCI on the PDCCH, and the user data on the PDSCH indicated by the PDCCH).

Control information in the downlink (can be termed, e.g., downlink control information, DCI) has basically the same purpose in 5G NR as the DCI in LTE, namely being a special set of control information that e.g. schedules a downlink data channel (e.g. the PDSCH) or an uplink data channel (e.g. PUSCH). In an exemplary 5G NR compliant implementation there are a number of different DCI formats defined already (see TS 38.212 v16.6.0 section 7.3.1). An overview is given by the following table.

| DCI format | Usage |
| --- | --- |
| 0_0 | Scheduling of PUSCH in one cell |
| 0_1 | Scheduling of PUSCH in one cell |
| 0_2 | Scheduling of PUSCH in one cell |
| 1_0 | Scheduling of PDSCH in one cell |
| 1_1 | Scheduling of PDSCH in one cell |
| 1_2 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |
| 2_4 | Cancel UL transmission |
| 2_5 | Notify availability of soft resources |
| 2_6 | Notify power saving information |
| 3_0 | Scheduling for Sidelink, NR PSCCH and NR PSSCH in one cell; |
| 3_1 | Scheduling for Sidelink; LTE PSCCH and LTE PSSCH in one cell |

In 5G NR, PDCCH is transmitted in radio resource regions called control resource sets (CORESETs). In LTE, the concept of a CORESET is not explicitly present. Instead, PDCCH in LTE uses the full carrier bandwidth in the first 1-3 OFDM symbols (four for the most narrowband case). By contrast, a CORESET in 5G NR can occur at any position within a slot and anywhere in the frequency range of the carrier, except that the UE is not expected to handle CORESETs outside its active bandwidth part (BWP).

Accordingly, a UE performs a monitoring operation of the PDCCH, e.g. as defined in 3GPP TS 38.213 version 16.6.0, sections 10 and 11. As exemplarily defined therein, the UE monitors a set of PDCCH candidates, which is defined in terms of PDCCH search space sets. A search space set can be a common search space set (CSS set) or a UE-specific search space set (USS set).

Search space sets are monitored in one or more CORESETs on the active DL BWP on each activated serving cell configured with PDCCH monitoring using the corresponding search space sets, where monitoring implies decoding each PDCCH candidate according to the monitored DCI formats.

Conceptually, Fig. 6 provides an exemplary illustration of the relationship between bandwidth parts, CORESETS, search spaces, search space sets and the PDCCH candidates that a UE can monitor. As apparent from Fig. 6, one CORESET is illustrated per BWP, although more than one are possible. Each CORESET can then have several search spaces of one or more PDCCH candidates of a particular Aggregation Level (such as AL2, 4 or 8), which in turn can then be grouped into a search space set, such as a common SS set and a UE-specific SS set.

*Time-domain in 5G NR*

In the time domain, transmissions in 5G NR are organized into frames of length 10ms, each of which is divided into 10 equally sized subframes of length 1ms. A subframe in turn is divided into one or more slots consisting of 14 OFDM symbols each. The duration of a slot in milliseconds depends on the numerology. For instance, for the 15 kHz subcarrier spacing, an NR slot thus has the same structure as an LTE subframe with normal cyclic prefix. A subframe in 5G NR serves as a numerology-independent time reference, which is useful, especially in the case of multiple numerologies being mixed on the same carrier, while a slot is the typical dynamic scheduling unit. This frame structure, on which the 3GPP 5G NR communication is based, is illustrated exemplarily in **Fig. 7**.

5G NR provides a plurality of slot formats, a slot format indicates how each of symbols within a single slot is used. It defines which symbols within a specific slot are used for uplink and which symbols are used for downlink. In LTE TDD, if a subframe (equivalent to a slot in NR) is configured for DL or UL, all of the symbols within the subframe should be used as DL or UL. But in NR, each of the symbols within a slot can be configured differently as DL or UL. Also flexible symbols exist, which can be configured as DL or UL.

*Uplink control information in 5G NR, PUCCH*

Whereas Downlink Control Information is carried by the PDCCH (see above explanation), Uplink Control Information (UCI) can be transmitted on the PUCCH or the PUSCH depending on the situation. Uplink control information can be e.g. the channel state information (CSI), the ACK/NACK information (e.g. HARQ ACK/NACK) and scheduling requests (SRs) (see e.g. 3GPP TS 38.300 v 16.7.0 section 5.3.3). Here, HARQ is taken as an example of a re-transmissions protocol. Not all of these need be carried separately by a single PUCCH transmission, but one or any combination of these three types of UCI; for instance, the CSI may be carried alone, or the ACK/NACK may be carried alone, or the SR may be carried alone, or the CSI and ACK/NACK are transmitted together in a PUCCH, etc.

The UE can use a PUCCH resource to transmit the UCI in the uplink to the gNB. As will be mentioned later, a PUCCH resource may also be configured to use a PUCCH repetition functionality and optionally may define the number of repetitions for the UCI transmission.

In the following, one example of how to transmit UCI according to a current 5G-compliant implementation will be presented.

There are a plurality of different PUCCH formats that can be used for transmitting the UCI; presently there are five PUCCH formats, 0-4, as exemplary illustrated in the following table (see e.g. 3GPP TS 38.211 v 16.7.0, section 6.3.2.1).

**Table 6.3.2.1-1: PUCCH formats.**

| PUCCH format | Length in OFDM symbols $N_{\mathrm{symb}}^{\mathrm{PUCCH}}$ | Number of bits |
|:---:|:---:|:---:|
| 0 | 1-2 | $\leq 2$ |
| 1 | 4-14 | $\leq 2$ |

(continued)

| PUCCH format | Length in OFDM symbols $N_{symb}^{PUCCH}$ | Number of bits |
|:---:|:---:|:---:|
| 2 | 1-2 | >2 |
| 3 | 4-14 | >2 |
| 4 | 4-14 | >2 |

Two of the formats, 0 and 2, are sometimes referred to as short PUCCH formats, because they occupy at most 2 OFDM symbols. In many cases the last one or 2 OFDM symbols in a slot are used for PUCCH transmission, for example, to transmit a hybrid ARQ acknowledgment (ACK/NACK) for the downlink data transmission.

Three of the formats, 1, 3, and 4, are sometimes referred to as long PUCCH formats, because they occupy from 4 to 14 OFDM symbols. The reason for having a longer time duration than the previous two formats is coverage. If a duration of one or two OFDM symbols does not provide sufficient received energy for a reliable reception, a longer time duration might be useful and one of the long PUCCH formats can be used.

According to a specific and exemplary implementation, the short PUCCH format 0 of up to two UCI bits is based on sequence selection, while the short PUCCH format 2 of more than two UCI bits frequency-multiplexes UCI and DMRS. The long PUCCH formats time-multiplex the UCI and DMRS. Frequency hopping is supported for long PUCCH formats and for short PUCCH formats of duration of 2 symbols. Long PUCCH formats can be repeated over multiple slots (see e.g. 3GPP TS 38.300 v 16.7.0 section 5.3.3).

Which PUCCH format is used can be e.g. determined based on how many bits of UCI should be transmitted and how many symbols (duration of the PUCCH) can be used. It may also depend on whether the UE is able to transmit the UCI over the PUSCH (see e.g. section 9.2.2 of TS 38.213 v16.7.0).

The UCI can be transmitted on the PUCCH flexibly in the time domain and frequency domain using specifically assigned radio resources, e.g. so called PUCCH resources. A UE can be configured with a plurality of (e.g. up to four) sets of PUCCH resources, wherein each contains PUCCH resources associated with PUCCH Resource Indicator (PRI) indexes. For instance, a UE can be configured with up to 4 dedicated PUCCH resource sets, which may comprise several PUCCH resources (may also be called PUCCH resource configurations), where each PUCCH resource configuration contains the PUCCH format to use and further transmission parameters, e.g. including a first symbol, a duration (number of symbols), a PRB offset, and a cyclic shift index set. A PUCCH resource set is provided by the information element *PUCCH-ResourceSet* and is associated with a PUCCH resource set index provided by *pucch-ResourceSetId,* with a set of PUCCH resource indexes provided by *resourceList* that provides a set of *pucch-ResourceId* used in the PUCCH resource set, and wherein a maximum number of UCI information bits the UE can transmit using a PUCCH resource in the PUCCH resource set provided by maxPayloadSize. The maximum number of PUCCH resources in the first PUCCH resource set is 32, and the maximum number of PUCCH resources in the other PUCCH resource sets is 8.

The configuration of such uplink resources can be done by different information elements, e.g. of the RRC protocol layer, such as the *PUCCH-Config* information element (see e.g. 3GPP TS 38.331 v16.6.0, such as section 6.3.2), which can provide the UE with a dedicated PUCCH resource configuration.

Each PUCCH resource set may correspond to a certain range of payloads for UCI feedback to be transmitted. For instance, PUCCH resource set 0 can handle UCI payloads up to two bits and hence only contains PUCCH formats 0 and 1, while the remaining PUCCH resource sets may contain any PUCCH format except format 0 and 1.

An example is presented in the following in line with Table 9.2.1-1 of TS 38.213 v16.7.0, which illustrates PUCCH resource sets provided by the IE *puuch-ResourceCommon,* to be used by the UE if the UE does not have a dedicated PUCCH resource configuration:

**Table 9.2.1-1: PUCCH resource sets before dedicated PUCCH resource configuration**

| Index | PUCCH format | First symbol | Number of symbols | PRB offset $RB_{BWP}^{offset}$ | Set of initial CS indexes |
|:---:|:---:|:---:|:---:|:---:|:---:|
| 0 | 0 | 12 | 2 | 0 | {0,3} |
| 1 | 0 | 12 | 2 | 0 | {0, 4, 8} |
| 2 | 0 | 12 | 2 | 3 | {0, 4, 8} |

(continued)

| Index | PUCCH format | First symbol | Number of symbols | PRB offset $RB_{\mathrm{BWP}}^{\mathrm{offset}}$ | Set of initial CS indexes |
|-------|--------------|--------------|-------------------|-----------|---------------------------|
| 3 | 1 | 10 | 4 | 0 | {0, 6} |
| 4 | 1 | 10 | 4 | 0 | {0, 3, 6, 9} |
| 5 | 1 | 10 | 4 | 2 | {0, 3, 6, 9} |
| 6 | 1 | 10 | 4 | 4 | {0, 3, 6, 9} |
| 7 | 1 | 4 | 10 | 0 | {0, 6} |
| 8 | 1 | 4 | 10 | 0 | {0, 3, 6, 9} |
| 9 | 1 | 4 | 10 | 2 | {0, 3, 6, 9} |
| 10 | 1 | 4 | 10 | 4 | {0, 3, 6, 9} |
| 11 | 1 | 0 | 14 | 0 | {0, 6} |
| 12 | 1 | 0 | 14 | 0 | {0, 3, 6, 9} |
| 13 | 1 | 0 | 14 | 2 | {0, 3, 6, 9} |
| 14 | 1 | 0 | 14 | 4 | {0, 3, 6, 9} |
| 15 | 1 | 0 | 14 | $\left\lfloor N_{\mathrm{BWP}}^{\mathrm{size}}/4 \right\rfloor$ | {0, 3, 6, 9} |

The current reporting of the UCI in the PUCCH is defined in 3GPPTS 38.213 v16.7.0, section 9.2.
A PUCCH resource may include one or more of the following parameters.

- A PUCCH resource index
- An index of the first PRB (Physical Resource Block) prior to frequency hopping and for no frequency hopping
- An index of the first PRB after frequency hopping
- An indication for intra-slot frequency hopping
- A configuration for a PUCCH format

The PUCCH resources are assigned by the gNB such that they are different for each UE. By assigning different PUCCH resources to the UE, it is ensured that UEs can use these resources at the same time without causing collisions or interference with one another.
The PUCCH resource sets are assigned with a range of UCI payload sizes. The UE first determines the UCI payload size, and then selects the appropriate PUCCH resource set on that basis. Then, based on the PRI indicated (e.g. in the DCI), the PUCCH resource from the PUCCH resource set is selected.
An example of the reporting of HARQ-feedback (ACK/NACK) using the PUCCH is defined in 3GPP TS 38.213 v16.7.0, section 9.2.3.
An example of the reporting of a scheduling request (SR) using the PUCCH is defined in 3GPP TS 38.213 v16.7.0, section 9.2.4. In particular, a UE is configured with specific parameters for determining the scheduling request radio resources to be used for transmitting a scheduling request (SR). For instance, a periodicity and offset are defined for the SR transmission and are used to determine the slot and/or the frame number for the SR transmission occasion based on the configured *schedulingRequestConfig* Information Element. In said respect, the configuration of such SR resources can be done by different information elements, e.g. of the RRC protocol layer, such as the *SchedulingRequestConfig* information element and the *SchedulingRequestResourceConfig* information element (see e.g. 3GPP TS 38.331 v16.6.0, such as section 6.3.2).
However, it is also possible for the UE to report multiple UCI types, such as the HARQ feedback, CSI and SR in the PUCCH, together (see e.g. 3GPP TS 38.213 v16.7.0, section 9.2.5).

*SPS and UCI - HARQ-ACK transmission*

In addition to dynamically scheduling uplink and downlink transmissions of a UE (e.g. using a DCI), uplink/downlink resources can be allocated persistently, e.g. for an initial (HARQ) transmission, while re-transmissions can be dynamically signaled via the L1/L2 channels (e.g. DCI). This kind of operation is thus referred to as semi-persistent scheduling (SPS), i.e. resources are allocated to the user equipment on a semi-persistent basis (semi-persistent resource allocation). The benefit is that PDCCH resources for initial (HARQ) transmissions are saved.

In current exemplary 5G NR implementations, the configuration of semi-persistent scheduling is done by RRC signaling, e.g. using the Information Element *SPS-Config*. Multiple Downlink SPS configurations may be considered in one BWP of a serving cell (see TS 38.331 v16.6.0). For instance, the periodicity of the persistent allocation can be signaled to the UE. The activation of a persistent allocation and also the exact timing as well as the physical radio resources and transport format parameters are then sent via PDCCH signaling. Once semi-persistent scheduling is activated, the user equipment follows the semi-persistent resource allocation according to the SPS activation PDCCH and the *SPS-config* provided by the RRC IE (including the periodicity) (see also 3GPP TS 28.214 v16.7.0 section 5.1.2.1). In order to distinguish a dynamic PDCCH from a PDCCH which activates semi-persistent scheduling (also referred to as SPS activation PDCCH), a separate identity is introduced. Basically, the CRC of an SPS activation PDCCH is masked with this additional identity, which is referred to as SPS C-RNTI. Similar to the activation of semi-persistent scheduling, the gNB also can deactivate semi-persistent scheduling, also called SPS resource release.

The transmission of HARQ feedback is also supported for SPS-allocated PDSCH transmissions. For instance, as currently defined, the parameter *n1PUCCH-AN* indicates the HARQ resource for the PUCCH for downlink SPS, configured by the network as format0 or format1. The actual *PUCCH-Resource* is configured in the IE *PUCCH-Config* mentioned above and referred to by its ID. The Information Element *SPS-PUCCH-AN* is used to indicate a PUCCH resource for HARQ ACK (via the PUCCH resource ID) and configure the corresponding maximum payload size for the PUCCH resource. Furthermore, the IE *SPS-PUCCH-AN-List* is used to configure the list of PUCCH resources per HARQ ACK codebook (see TS 38.331 v16.6.0), and may override n1PUCCH-AN of SPS-Config.

Further, according to this example, the Information Element *PUCCH-Config* also includes a parameter called *dl-DataToUL-ACK,* which gives for a given PDSCH a timing to the ACK feedback in the uplink, also called in the following feedback timing indicator or K1-value. Correspondingly, for an SPS PDSCH reception ending in a DL slot $n_D$, the UE transmits the corresponding PUCCH HARQ-feedback in UL slot $n_D$+K1 (see TS 38.213 v16.7.0; section 9.2.3). Overall, the UE is thus configured with a parameter (K1), which indicates the delay between the SPS PDSCH reception and the corresponding PUCCH transmission e.g. in terms of slots.

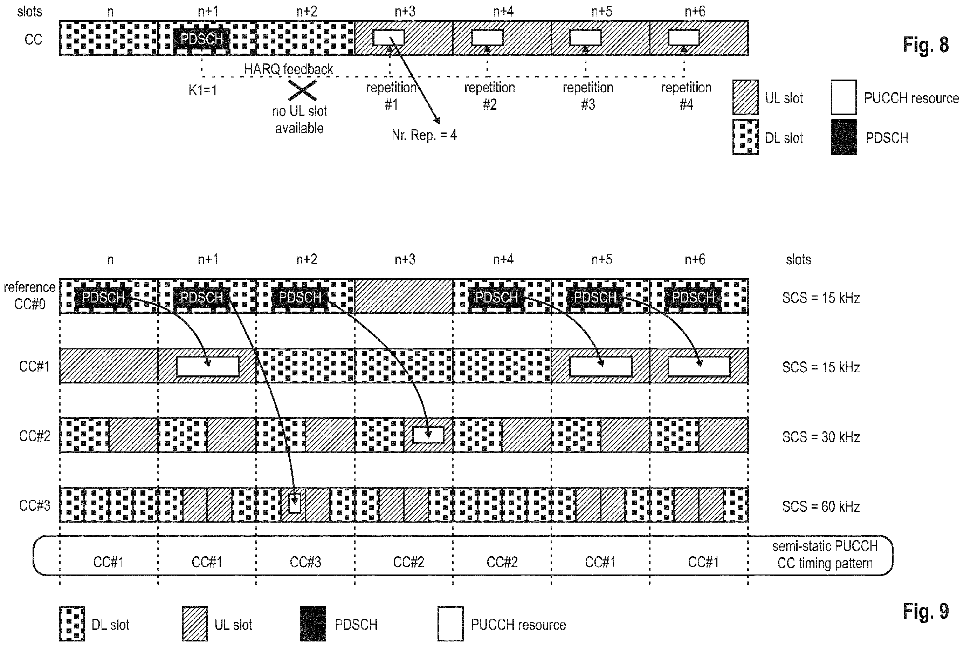

An SPS traffic is illustrated in **Fig. 8**, which assumes a configured SPS PDSCH transmission in slot n+1. Further assuming the parameter K1=1, the UE attempts to transmit the corresponding HARQ feedback for the received PDSCH with an offset of 1 slot, i.e. in slot n+2. As assumed in the exemplary scenario of Fig. 8, slot n+2 is however a DL slot, and thus not available for any uplink transmission, including the HARQ feedback. Correspondingly, the UE would not be able to transmit the HARQ feedback.

3GPP has defined a HARQ deferral mechanism for such scenarios, according to which the HARQ feedback transmission can be deferred (postponed) to another slot. In said connection, another parameter, called K1def, can be configured, which defines a maximum allowed deferral in terms of slots. The effective maximum offset of the HARQ feedback would thus be defined as K1eff = K1 + K1def. If defined, the maximum deferral K1def is at least 1 slot. In one example, the HARQ-ACK deferral is enabled for SPS and per SPS configuration. For SPS HARQ-ACK deferral, the target PUCCH slot is defined as the next PUCCH slot, where an available (valid) PUCCH resource can be used by the UE for the HARQ feedback transmission.

In the exemplary scenario of Fig. 8, the deferral mechanism allows the UE to defer the HARQ feedback for the PDSCH of slot n+1 from (downlink) slot n+2 to (uplink) slot n+3 or - depending on the value of K1def - even further. Correspondingly, the UE can transmit the HARQ feedback in a suitable PUCCH resource of e.g. slot n+3, as assumed for the example of Fig. 8.

*PUCCH Repetitions*

3GPP also supports a PUCCH repetition procedure, according to which a transmission of information via the PUCCH (e.g. UCI) is repeated several times. One example implementation of the PUCCH repetition functionality is defined according to 3GPP TS 38.213 v16.7.0, section 9.2.6. In this example, PUCCH repetition is supported for PUCCH formats 1, 3, or 4, and the UE is configured with a number of slots for the PUCCH transmission repetition, using the parameter *nrofSlots* (n2, n4, n8), provided as part of the *PUCCH-Config* information element (see TS 38.331). The parameter *nrofSlots* indicates the number of slots with the same PUCCH (of format F1, F3, F4). The UE correspondingly repeats the PUCCH transmission with the UCI over the indicated number of slots.

3GPP is discussing for Release 17 to provide enhancements for PUCCH repetitions, such as the support of sub-slot PUCCH repetition and the dynamic indication of PUCCH repetitions.

In one example, the new functionality to dynamically indicate the PUCCH repetition can be used for a slot-based PUCCH repetition as well as for a sub-slot-based PUCCH repetition. For a slot-based PUCCH repetition, it is assumed that a slot contains only one PUCCH resource. However, for sub-slot-based PUCCH repetition, a slot may contain several PUCCH resources (one per sub-slot), each of which could be used for a PUCCH repetition. One option is that the value K1 (see SPS configuration *dl-DataToUL-ACK* above) is then interpreted on a sub-slot basis, not on a slot basis. In addition, for sub-slot-based PUCCH repetition, a semi-statically-configured PUCCH repetition (e.g. using the parameter *nrofSlots,* discussed above) and a dynamically-configured repetition factor based operation is supported (subject to separate UE capabilities). Further, slot-based PUCCH repetition may be supported for PUCCH Format 0 and Format 2 also for single TRP operation, where the support may be subject to the indication of UE capability.

Furthermore, in Rel-15/16, the PUCCH repetition factor is configured per PUCCH format. On the other hand, it is possible that in Rel. 17, the PUCCH repetition factor can be configured per PUCCH resource (e.g. containing the PUCCH format, the first symbol, duration, PRB offset, Cyclic shift).

A simplified implementation of the PUCCH repetition functionality is explained with reference to **Fig. 8,** which illustrates an exemplary scenario with a configured SPS PDSCH in slot n+1. Assuming an HARQ feedback offset K1 = 1, and allowing HARQ deferral (see above section), the UE may transmit the HARQ feedback in a configured PUCCH resource of slot n+3. It is further assumed that the PUCCH resource, used for transmitting the HARQ feedback in slot n+3, is configured with a *nrofslots* = 4, i.e. the PUCCH repetition functionality is to be used in addition, particularly by repeating the PUCCH four times in total, including the first transmission in slot n+3, which is considered as the first transmission repetition (see "Nr. Rep." in Fig. 8). As apparent from Fig. 8, the UE performs the repeated PUCCH transmissions in the subsequent uplink slots n+4, n+5, and n+6.

*PUCCH Carrier Switching*

In Time-Division-Duplex (TDD) systems, the PUCCH, carrying the UCI transmission, might be delayed or deferred often due to the unavailability of uplink slots, especially with heavy (DL) slot configurations (see e.g. Fig. 8 and the unavailable ULslot n+2). This problem can be alleviated by using the PUCCH carrier switching functionality, according to which different carriers can be utilized for PUCCH transmissions. For instance, a carrier can be used that is different from the carrier carrying the PDSCH transmission.

Release 17 is likely to support two different PUCCH carrier switching schemes, namely dynamic and semi-static PUCCH carrier switching. In more detail, for dynamic carrier switching, the target PUCCH carrier is indicated by a DCI adaptively and dynamically. When a fallback DCI is used or no DCI is used, such as for the SR and CSI transmission or an SPS-configured PDSCH, a semi-static carrier switching (see below) could be used. Alternatively, the SR or CSI could be multiplexed with the HARQ feedback in a PUCCH resource indicated by the DCI.

For instance, the DCI indicating a PUCCH carrier for the carrier switching can apply to the HARQ-feedback of the PDSCH transmission scheduled by said DCI, but may also apply to:

- HARQ feedback corresponding to the first SPS PDSCH activated by an Activation DCI, based on the indication in the activation DCI,
- HARQ feedback corresponding to the SPS Release DCI, based on the indication in the release DCI triggered PUCCH for Rel.-16 Type 3 CB (codebook), Rel-17 enh. Type 3 CB of smaller size and Rel.-17 one-shot triggering for HARQ-feedback retransmission based on the indication in the triggering DCI.

On the other hand, for semi-static carrier switching, a timing pattern can be configured (e.g. by the gNB and provided to the UE using RRC) and then used by the gNB and UE to determine the target PUCCH carrier over which the UCI will be transmitted. Semi-static PUCCH carrier switching is applicable to all UCI types, including HARQ feedback, SR and CSI.

For instance, semi-static PUCCH cell switching is operated based on a reference cell, which can be e.g. the PCell (Primary Cell; e.g. used for initial access), the PSCell (Primary Cell of the Secondary Cell Group, SCG), or a PUCCH-SCell. The time-domain-pattern configurations are based on the numerology of the reference cell, e.g. including the time-domain structure (time slots) of the reference carrier. The PDSCH to HARQ-ACK offset K1 can be e.g. interpreted based on the numerology and PUCCH configuration of the reference cell to be able to apply the time-domain PUCCH cell switching pattern or can be interpreted based on the carrier carrying the PDSCH. It should be noted, that there may not be a need to define a 'reference cell' in the 3GPP specification; rather this terminology is used for clarification purposes of the procedure.

According to one example, for PUCCH carrier switching, the UE indicates the maximum number of PUCCH cells that can be configured, through UE capability signaling using a value range of {2, 3, 4} cells. Further, PUCCH carrier switching is supported only among different TDD cells with PUCCH configured on the NUL carrier in Rel-17. According to one example, the timing pattern for PUCCH carrier switching can be defined by RRC or by a (e.g. semi-static) rule known to both UE and gNB.

For PUCCH carrier switching, the PUCCH configuration (e.g. the *PUCCH-Config* information element or the *PUCCH-ConfigurationList)* can be e.g. per uplink bandwidth part (e.g. per candidate cell and uplink bandwidth part of that specific candidate cell).

A simplified implementation of PUCCH carrier switching is illustrated in **Fig. 9.** It is exemplarily assumed that the UE has four component carriers (CC), CC#0 - CC#3, of which CC#0 is the reference carrier for the PUCCH carrier switching functionality. Corresponding, the slot numbering n, n+1... is illustrated based on reference carrier CC#0. It is further exemplarily assumed that CC#0 and CC#1 have a sub-carrier spacing (SCS) of 15 kHz, while CC#2 has a SCS of 30 kHz, and CC#3 has a SCS of 60 kHz. The illustrated slot numbering for the reference CC#0 also applies to the slots of CC#1, and no slot numbering is illustrated for CC#2 and CC#3. An exemplary TDD timing of uplink and downlink slots is illustrated in Fig. 9 for all CCs. Furthermore, it is assumed that PUCCH carrier switching is to be used, and an exemplary semi-static timing pattern is illustrated at the bottom of Fig. 9, indicating for each slot of the reference carrier CC#0 which CC should be used for the PUCCH transmission.

In the exemplary scenario of Fig. 9, it is assumed that the UCI is the HARQ feedback for PDSCH transmissions, received in slots n, n+1, n+2, n+4 and n+5. The downlink resources are here exemplarily configured based on an SPS-configuration. For ease of explanation and illustration, it is further exemplarily assumed that a PDSCH-to-PUCCH offset K1 is defined as 1 slot, on the basis of the reference carrier CC#0.

The resulting HARQ feedback for each of the PDSCH transmissions is then transmitted in suitable PUCCH resources available in the corresponding component carrier, determined by the semi-static PUCCH timing pattern.

In particular, the HARQ feedback for the PDSCH of slot n would thus be transmitted by the UE in reference slot n+1 (=n+K1) and in CC#1 (see timing pattern) using a suitable PUCCH resource thereof. The HARQ feedback for the PDSCH of slot n+1 would thus be transmitted by the UE within reference slot n+2 (=n+1+K1) and in a time slot of CC#3 (see timing pattern) and using a suitable PUCCH resource thereof, e.g. in the first available uplink slot of the four slots of CC#3 corresponding to reference slot n+2. The HARQ feedback for the PDSCH of slot n+2 would thus be transmitted by the UE within reference slot n+3 (=n+2+K1) and in a time slot of CC#2 (see timing pattern) and using a suitable PUCCH resource thereof, e.g. in the first available uplink slot of the two slots of CC#2 corresponding to reference slot n+3. Following the same functionality, the HARQ feedback for the PDSCH of slot n+4 is transmitted in the PUCCH resource of CC#1 in slot n+5, and the HARQ feedback for the PDSCH of slot n+5 is transmitted in the PUCCH resource of CC#1 in slot n+6.

*Further Improvements*

In the above, the two functionalities of PUCCH carrier switching and PUCCH repetitions, as currently envisioned by the 3GPP, have been explained in detail. Although the ultimate details on these two functions may not be finalized yet, it is clear that both functions will be implemented with their respective core functionality in a future release, e.g. Rel.17 or later. Further, while PUCCH carrier switching and PUCCH repetitions are two independent functions, their joint operation has to be fully considered.

When both PUCCH carrier switching and PUCCH repetitions are enabled, the UE may need to perform the PUCCH transmissions over different carriers, which in turn may result in using different PUCCH resources of the different carriers. It may thus be unclear which PUCCH resources on which carrier(s) are to be used.

Furthermore, the different PUCHC resources may e.g. be associated with different PUCCH repetition factors, such that it would not be clear how many repetitions should be performed in total and how many in the respective carriers.

In addition, the parameters (such as format, PRBs, number of symbols, transmission power, etc.) of the PUCCH transmissions over the different carriers are not the same, such that the reliability of the PUCCH transmission may be different over the different carriers. It is thus unclear whether a particular number of repetitions would be sufficient to provide a minimum reliability of the overall PUCCH repetitions. Alternatively, when assuming reliable carriers, less repetitions might suffice to arrive at a sufficiently reliable overall PUCCH repetitions.

Overall, the joint operation of the two functions, PUCCH carrier switching and PUCCH repetition, may require additional considerations.

The inventors have identified the above-discussed potential drawbacks and challenges and have thus identified the possibility of providing an improved procedure for transmitting uplink control information (UCI) that allows avoiding or mitigating one or more of the above-identified problems. The present invention relates to different solutions and variants for such an improved UCI transmission procedure.

For instance, the improved UCI transmission procedure is particularly applicable in scenarios where the UE jointly operates the PUCCH repetition functionality and the PUCCH carrier switching functionality. It correspondingly involves for each transmission repetition the determination of the component carrier and of the suitable resources in the uplink for performing the UCI transmission.

*Embodiments*

In the following, UEs, base stations, and respective procedures to meet these needs will be described for the new radio access technology envisioned for the 5G mobile communication systems, but which may also be used in previous LTE mobile communication systems or future mobile communication systems. Different implementations and variants will be explained as well. The following disclosure was facilitated by the discussions and findings as described above and may for example be based at least on part thereof.

In general, it should be noted that many assumptions have been and are made herein so as to be able to explain the principles underlying the present disclosure in a clear, concise and understandable manner. These assumptions are however to be understood merely as examples made herein for illustration purposes, which are not necessarily essential for the invention and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next communication systems is not fully decided yet or might finally change. Thus, terms could be changed in the future, without affecting the functioning of the respective features and embodiments. Consequently, a skilled person is aware that the embodiments and their scope of protection should not be restricted to particular terms exemplarily used herein for lack of newer or finally agreed terminology, but should be more broadly understood in terms of functions and concepts that underlie the solutions explained in the present disclosure.

For instance, a **mobile station** or **mobile node** or **user terminal** or **user equipment (UE)** is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term "base station" or "**radio base station**" here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB.

Communication between the UE and the base station is typically standardized and may be defined by different layers, such as PHY, MAC, RRC etc. (see above background discussion).

The expression "**transmission repetition**" is to be understood in the context of a repetition functionality, according to which a UE can perform repeated transmissions of the same information e.g. uplink control information. Correspondingly, a transmission repetition refers to a single transmission, out of a series of one or more transmission repetitions.

The expression "**effective number**", as part of other expressions such as "target effective number", "current effective number" or "individual effective number", is primarily used in the context of transmission repetition(s) and is to be broadly understood in an abstract manner as representing an effectiveness of an individual transmission repetition or a plurality of transmission repetitions. For instance, while the actual number of an individual (i.e. a single) transmission repetition is always 1, the corresponding effective number for said single transmission repetition can be the same, larger or smaller than the actual number 1, depending on the effectiveness (could also be called differently, e.g. efficiency) of the single transmission repetition (see also expression "transmission-effectivity coefficient" below). Similarly, when performing x times a transmission repetition (i.e. actual number is x), the corresponding effective number achieved by said x transmission repetitions (e.g. using the expression "current effective number of transmission repetitions" explained below) can be the same, larger or smaller than x.

Therefore, the expression "effective number" is to be understood differently than the expression "actual number".

Furthermore, the expression "target effective number of transmission repetitions" is thus to be understood as defining an effective number of transmission repetitions that is to be used as a target for the transmission of specific UCI, e.g. that the UE shall perform the repetitions until reaching said target.

Moreover, the expression "**current effective number of transmission repetitions**" is thus to be understood as defining an effective number of transmission repetitions that the UE has currently accumulated by having performed past transmission repetitions for the transmission of the specific UCI. In addition, rather than referring to an actual number of transmission repetitions (e.g. simply incremented by 1 with each transmission repetition), the current effective number is based on the effective number that is contributed by each of the transmission repetitions. For instance, the current effective number can be calculated by summing the respective effective numbers represented by each transmission repetition already performed in the past for the specific UCI.

The target and current effective number of transmission repetitions both refer to the same UCI to be transmitted.

The expression **"transmission-effectivity coefficient"** is used in the context of the "effective number" and represents the effectiveness (could also be called differently, e.g. efficiency) of a transmission. The "transmission-effectivity coefficient" can be abbreviated TEC in the following. In one example, the "transmission-effectivity coefficient" is defined with relation to a component carrier and is thus carrier-specific. The TEC is carrier specific because uplink transmissions of UCI over different carriers can have different efficiencies. In another example, the TEC can be specific to uplink resources of one among many carriers, because the transmission effectiveness can vary from one uplink resource to another.

Instead of the expression **"component carrier"**, other suitable expressions can also be used, such as "cell", "candidate cell", or "carrier".

The expression **"uplink resource"** is to be understood broadly as a resource of a component carrier that can be used by the UE to transmit information, such as the UCI. In one example, the "uplink resource" can include one or more of the time-frequency radio resources (e.g. start symbol and duration in symbols, physical resource block), an uplink control format (e.g. PUCCH format), and a cyclic shift index. Another example for uplink resource is the radio resource on PUSCH which multiplexes the UCI and data information.

For the following solutions it is exemplarily assumed that the improved UCI transmission procedure can be conceptually based on the PUCCH repetition functionality and PUCCH carrier switching functionality already defined according to 3GPP 5G standards, as explained above.

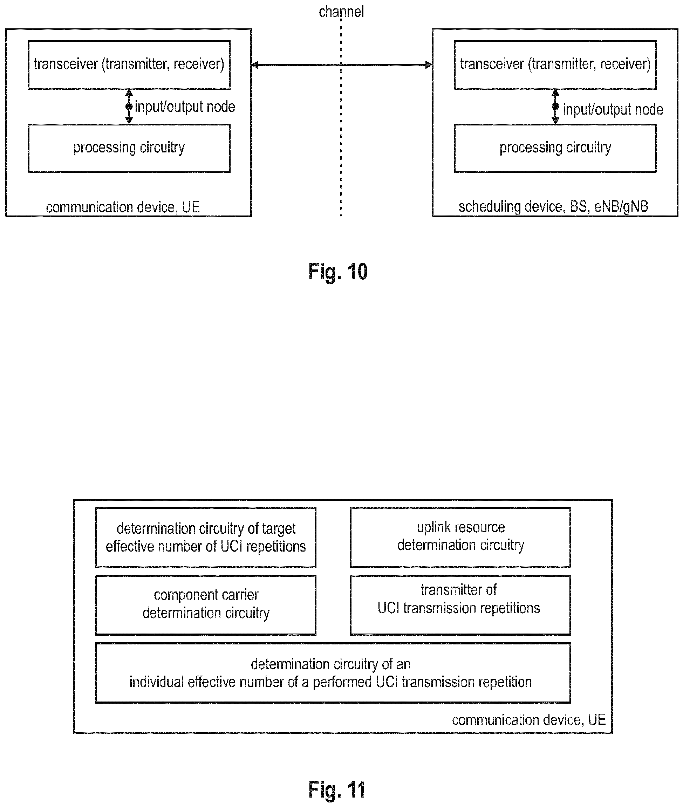

**Fig. 10** illustrates a general, simplified and exemplary block diagram of a user equipment (also termed communication device) and a scheduling device (here exemplarily assumed to be located in the base station, e.g. the LTE eNB (alternatively termed ng-eNB) or the gNB in 5G NR). The UE and eNB/gNB are communicating with each other over a (wireless) physical channel respectively using the transceiver.

The communication device may comprise a transceiver and processing circuitry. The transceiver in turn may comprise and/or function as a receiver and a transmitter. The processing circuitry may be one or more pieces of hardware such as one or more processors or any LSIs. Between the transceiver and the processing circuitry there is an input/output point (or node) over which the processing circuitry, when in operation, can control the transceiver, i.e. control the receiver and/or the transmitter and exchange reception/transmission data. The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc. The transmitter may be responsible for performing the process of transmitting and other processes related thereto. The receiver may be responsible for performing the process of receiving and other processes related thereto, such as monitoring a channel.

Different solutions of an improved UCI transmission procedure will be described in the following. In said connection, improved UEs, improved base stations and improved integrated circuits are presented, which participate separately or together in the improved UCI transmission procedure. Corresponding methods for the UE behavior and the base station behavior are provided as well. The integrated circuits correspond to the UE and base station, and respectively their behavior.

**Fig. 11** illustrates a simplified and exemplary UE structure according to an exemplary implementation of the improved UCI transmission procedure, which can be implemented based on the general UE structure explained in connection with Fig. 10. The various structural elements of the UE illustrated in said Fig. 11 can be interconnected between one another e.g. with corresponding input/output nodes (not shown) e.g. in order to exchange control and user data and other signals. Although not shown for illustration purposes, the UE may include further structural elements.

As apparent from Fig. 11, the UE may include a determination circuitry for determining a target effective number of UCI transmission repetitions, a component carrier determination circuitry, an uplink resource determination circuitry, a transmitter of UCI transmission repetitions, and a determination circuitry for determining an individual effective number of a performed UCI transmission repetition.

In the present case as will become apparent from the below disclosure, the receiver of the UE can thus be exemplarily configured to at least partly perform one or more of receiving information on the target effective number of UCI transmission repetitions, and receiving information on the transmission-effectivity coefficient, e.g. in a resource scheduling message, an SR configuration, or a CSI configuration, etc.

In the present case as will become apparent from the below disclosure, the processing circuitry of the UE can thus be exemplarily configured to at least partly perform one or more of determining a target effective number of UCI transmission repetitions, determining a component carrier out of a plurality of component carriers configured for the UE, determining an uplink resource of a component carrier, determining a transmission-effectivity coefficient relating to component carriers, determining an individual effective number of an individual UCI transmission repetition, determining a current effective number of UCI transmission repetitions, etc.

In the present case as will become apparent from the below disclosure, the transmitter of the UE can thus be exemplarily configured to at least partly perform one or more of performing UCI transmission repetitions, etc.

One exemplary procedure as will be disclosed in more detail further below is implemented by a UE that includes the following. A processing circuitry of the UE determines a target effective number of transmission repetitions for uplink control information, UCI, that is available for transmission. A transmitter of the UE performs one or more transmission repetitions for the available uplink control information until the target effective number of UCI transmission repetitions is reached. For each transmission repetition of the available uplink control information:

- the processing circuitry, when in operation, determines one component carrier of a plurality of component carriers configured for the UE and determines an uplink resource of the determined component carrier, and

- the transmitter, when in operation, transmits the available uplink control information using the determined uplink resource of the determined component carrier.

Each of the performed UCI transmission repetitions contributes with an individual effective number towards the target effective number of UCI transmission repetitions, the effective number of each UCI transmission repetition depending on a transmission-effectivity coefficient relating to the component carrier used for performing the respective UCI transmission repetition.

A corresponding exemplary method comprises the following steps performed by a UE:

determining a target effective number of transmission repetitions for uplink control information, UCI, that is available for transmission,

performing one or more transmission repetitions for the available uplink control information until the target effective number of UCI transmission repetitions is reached,

wherein each transmission repetition of the available uplink control information includes:

- determining one component carrier of a plurality of component carriers configured for the UE and determining an uplink resource of the determined component carrier, and
- transmitting the available uplink control information using the determined uplink resource of the determined component carrier,

wherein each of the performed UCI transmission repetitions contributes with an individual effective number towards the target effective number of UCI transmission repetitions, the effective number of each UCI transmission repetition depending on a transmission-effectivity coefficient relating to the component carrier used for performing the respective UCI transmission repetition.

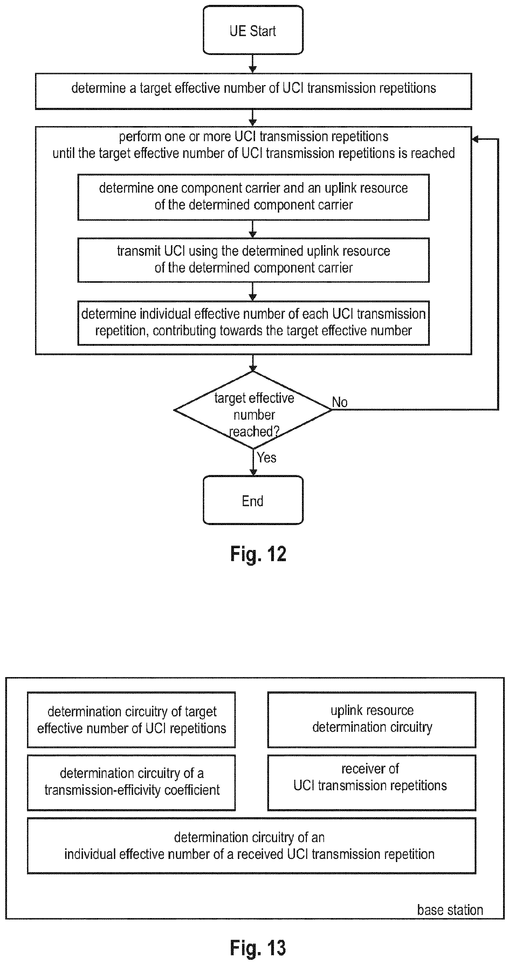

A corresponding sequence diagram for an exemplary UE behaviour in line with the above-discussed UE and UE method is illustrated in **Fig. 12**. As apparent therefrom, the UE determines a target effective number of UCI transmission repetitions, which is a parameter then used as an upper limit when performing a number of UCI transmission repetitions; see check "target effective number reached?" in Fig. 12. According to this exemplary implementation in Fig. 12, each UCI transmission repetition contributes with an individual effective number towards the target effective number, such that the UE performs as many transmission repetitions for the available uplink control information until the target effective number of UCI transmission repetition is reached, in which case the UE terminates the transmission repetitions for the available uplink control information.

The above described improved UCI transmission procedure thus overcomes some drawbacks explained above. For instance, the improved UCI transmission procedure unambiguously defines how the uplink resource, for transmitting the UCI, is to be determined, namely as corresponding to that component carrier which is to be used for transmitting the respective UCI transmission repetition. Furthermore, the newly introduced target parameter (target effective number of UCI transmission repetitions) takes into account the transmission repetitions over various component carriers and thus provides an unambiguous target value for the UCI transmissions repetitions.

Moreover, the newly introduced parameter transmission-effectivity coefficient to gather with the just discussed new parameter, target effective number of UCI transmission repetitions, allows the overall UCI repetition functionality to take into account the possibly different reliabilities of uplink transmissions carried out over uplink resources of different component carriers. Correspondingly, the resulting overall reliability of the UCI transmission repetitions is more likely to be adequate , e.g. sufficiently reliable and not excessively reliable (where less repetitions would have sufficed).

Some exemplary implementations of the improved UCI transmission procedure also involve the base station, to which the UE is currently connected (termed e.g. serving base station because the base station serves the UE). Correspondingly, the improved UCI transmission procedure also provides an improved base station that participates therein.

**Fig. 13** illustrates a simplified and exemplary base station structure according to an exemplary implementation of the improved UCI transmission procedure, which can be implemented based on the general base station structure explained in connection with Fig. 10. The various structural elements of the base station illustrated in said Fig. 13 can be interconnected between one another e.g. with corresponding input/output nodes (not shown) e.g. in order to exchange control and user data and other signals. Although not shown for illustration purposes, the base station may include further structural elements.

As apparent therefrom, the base station comprises a determination circuitry for determining a target effective number of UCI transmission repetitions, a determination circuitry for determining a transmission-effectivity coefficient, a determination circuitry for determining an uplink resource, a receiver of UCI transmission repetitions, and a determination circuitry for determining an individual effective number of a received UCI transmission repetition.

In the present case as will become apparent from the below disclosure, the receiver of the base station can thus be exemplarily configured to at least partly perform one or more of receiving UCI transmission repetitions from the UE etc.

In the present case as will become apparent from the below disclosure, the processing circuitry of the base station can thus be exemplarily configured to at least partly perform one or more of determining a target effective number of UCI transmission repetitions, determining a transmission-effectivity coefficient for each component carrier, determining a component carrier used for a UCI transmission repetition, determining an uplink resource of a component carrier for a UCI transmission repetition, determining an individual effective number of an individual UCI transmission repetition, determining a current effective number of UCI transmission repetitions, etc.

In the present case as will become apparent from the below disclosure, the transmitter of the base station can thus be exemplarily configured to at least partly perform one or more of transmitting information on the determined target effective number of UCI transmission repetitions, transmitting information on the determined transmission-effectivity coefficient for each component carrier, etc.

One exemplary procedure as will be disclosed in more detail further below is implemented by a base station that includes the following. A processing circuitry of the base station determines a target effective number of transmission repetitions for uplink control information, UCI, to be transmitted by a user equipment using an uplink resource of one of a plurality of component carriers configured for the UE. The processing circuitry determines, for each of the plurality of component carriers, a transmission-effectivity coefficient relating to the respective component carrier usable by the UE for performing the respective UCI transmission repetition. A transmitter of the base station transmits, to the UE, information on the determined target effective number of UCI transmission repetitions and information on the determined transmission-effectivity coefficient for each component carrier. A receiver of the base station receives, from the UE, UCI transmission repetitions, respectively via an uplink resource of one of the plurality of component carriers, until the target effective number of UCI transmission repetitions is reached. Each of the received UCI transmission repetitions contributes with an individual effective number towards the target effective number of UCI transmission repetitions, the effective number of each UCI transmission repetition depending on a transmission-effectivity coefficient relating to the component carrier via which the respective UCI transmission repetition is received.

A corresponding method comprises the following steps performed by the base station:

determining a target effective number of transmission repetitions for uplink control information, UCI, to be transmitted by a user equipment using an uplink resource of one of a plurality of component carriers configured for the UE,

determining, for each of the plurality of component carriers, a transmission-effectivity coefficient relating to the respective component carrier usable by the UE for performing the respective UCI transmission repetition,

transmitting, to the UE, information on the determined target effective number of UCI transmission repetitions and information on the determined transmission-effectivity coefficient for each component carrier,

receiving, from the UE, UCI transmission repetitions, respectively via an uplink resource of one of the plurality of component carriers, until the target effective number of UCI transmission repetitions is reached,

wherein each of the received UCI transmission repetitions contributes with an individual effective number towards the target effective number of UCI transmission repetitions, the effective number of each UCI transmission repetition depending on a transmission-effectivity coefficient relating to the component carrier via which the respective UCI transmission repetition is received.

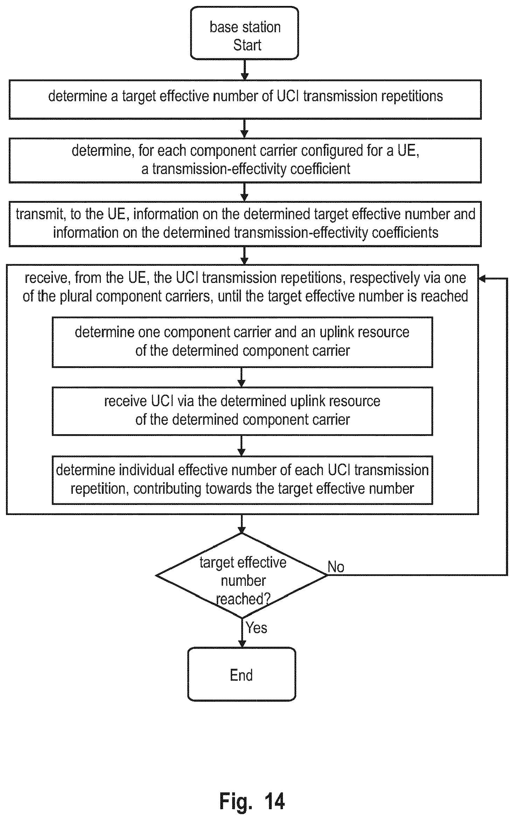

A corresponding sequence diagram for an exemplary base station behavior in line with the above-discussed base station and corresponding method is illustrated in **Fig.** 14. The sequence diagram illustrates an exemplary and simplified implementation of the above presented base station method. As apparent therefrom, the gNB can be responsible for determining the new parameters: target effective number of UCI transmission repetitions and the transmission-effectivity coefficient for each component carrier. The base station then provides the corresponding information to the UE, so as to have the same understanding. The base station, in a manner corresponding to the UE, receives the UCI transmission repetitions from the UE, which may also include the determination of the component carrier and the uplink resource to be used by the UE. Furthermore, the base station will also keep track of the effective number of the one or more individual UCI transmission repetitions performed so far by the UE, so as to know when the UE will stop performing the transmission repetitions for the UCI.

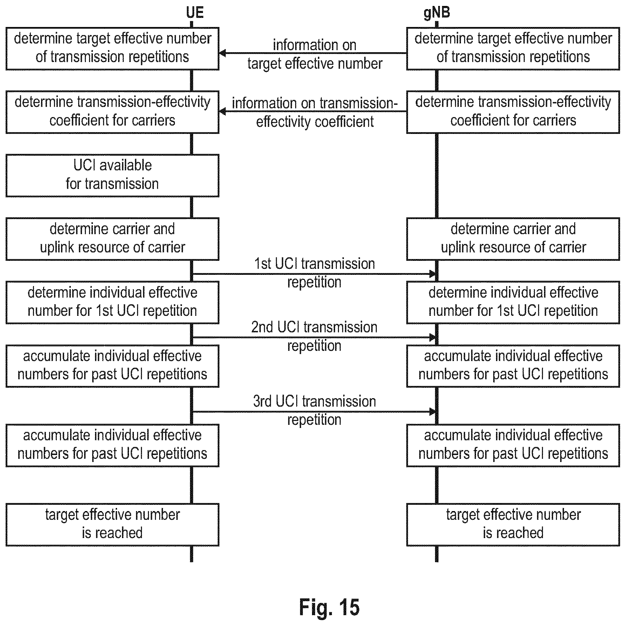

**Fig. 15** illustrates a simplified and exemplary interaction between the improved UE and improved base station (here e.g. gNB) of the above discussed improved UCI transmission procedure. In this solution presented in Fig. 15, the interaction first involves the determination of the target effective number of UCI transmission repetitions at the base station, which is then also responsible for transmitting suitable information on the target effective repetition number to the UE. Based on the received information, the UE then also determines the target effective repetition number it has to use when performing transmission repetitions for uplink control information.

Similarly, it is assumed in Fig. 15 that the base station determines the transmission-effectivity coefficient for the carriers of the UE and provides suitable information on the coefficients to the UE. Based on the received information, the UE then also determines the transmission-effectivity coefficient for each of its component carriers.

Eventually, uplink control information becomes available for transmission at the UE. The UE determines a carrier and the uplink resource of the carrier for transmitting the UCI, in this case for performing the 1st UCI transmission repetition. A similar procedure is performed at the base station, which is thus able to properly receive the 1st UCI transmission repetition from the UE. As discussed above, each UCI transmission repetition has an individual effective number, depending e.g. on the component carrier and the corresponding transmission-effectivity coefficient. The UCI transmission repetitions are to be performed by the UE until reaching the target effective number, where each UCI transmission repetition adds towards the target in accordance with its individual effective number.

In the exemplary scenario of Fig. 15, it is assumed that three UCI transmission repetitions are performed in total. The UE accumulates the individual effective numbers for the past UCI transmission repetitions, so as to determine the current effective number of all past UCI transmission repetitions. The UE then eventually determines that the target effective number is reached (in this case, after the third UCI transmission repetition) and stops with the UCI transmission repetitions. As illustrated, the base station performs corresponding operations.

In the following, more specific implementations and the variants of the above discussed operations will be described. The description will be primarily from the UE perspective. However, the corresponding operations are also performed at the base station side, in line with the description and illustration of Fig. 15, such that the following implementation and variants also apply to the base station operation.

Moreover, it is assumed that the uplink control information , available for transmission of the UE, can be e.g.

- feedback information of a retransmission protocol with regard to a downlink transmission. One example of a retransmission protocol is HARQ.

- a scheduling request.

- channel state information (can also be called channel quality information).

The improved UCI transmission procedure can be performed with any of the above-mentioned types of uplink control information. Nonetheless, the UE and BS behaviour may differ slightly in some details depending on the type of uplink control information that is to be transmitted by the UE.

Moreover, the improved UCI transmission procedure assumes a joint operation of the two functionalities, the uplink repetition functionality and the carrier switching functionality, examples of which are already explained above in connection with 5G-compliant implementations.

In brief, the uplink repetition functionality (see e.g. above section *"PUCCH Repetitions"*) allows the UE to perform more than one transmission of the uplink control information, where each of the more than one transmissions can be called "transmission repetition".

A more specific implementation of the uplink repetition functionality that can be used for the improved UCI transmission procedure (and its different variants and different implementations) is described above in the section *"PUCCH Repetitions"* for 5G.

Furthermore, in brief, the carrier switching functionality (see e.g. above section *"PUCCH Carrier Switching"*) allows the UE to switch to a different carrier for transmitting the uplink control information. Put differently, the carrier switching functionality involves that the carrier that is to be used for the UCI transmission can be switched and does not have to be always the same (e.g. exemplarily assuming the HARQ feedback as the UCI, the carrier for transmitting the UCI need not be the carrier via which the UE has received the corresponding downlink transmission).

In one exemplary implementation thereof, the carrier switching is performed depending on the timing of transmitting the uplink control information, e.g. using a semi-static timing pattern. The semi-static timing pattern is defined in relation to reference time slots of a reference component carrier and may define one component carrier to be used for the UCI transmission per reference time slot. Based on the timing of the UCI transmission, the reference time slot can be determined that corresponds to said UCI uplink timing. Then, the uplink carrier corresponding to the reference time slot is determined according to the timing pattern.

In another exemplary implementation, the carrier switching can be directly indicated to the UE. For instance, assuming that the UCI is HARQ feedback information, the carrier indication of the UCI component carrier can be dynamically indicated in a resource scheduling message (e.g. DCI) received from the base station and scheduling the corresponding downlink transmission for which the HARQ feedback is to be transmitted. Another variant assumes that the downlink transmission is configured by a semi-persistent scheduling (SPS) configuration, in which case the UCI carrier indication can be included in the corresponding SPS configuration of the downlink transmission.

A more specific implementation of the carrier switching functionality that can be used for the improved UCI transmission procedure (and its different variants and different implementations) is described above in the section *"PUCCH Carrier Switching"* for 5G.

The above explained improved UCI transmission procedure involves performing the UCI transmission repetitions until the target effective repetition number is reached. In one example, this involves the determination at the UE as to whether or not to perform a UCI transmission repetition, which can be based on whether the past UCI transmission repetitions (and particularly their respective individual effective numbers) are sufficient to fulfil the target effective number. The UE (and base station) can thus keep track of the past UCI transmission repetitions, and particularly keep track of the effective numbers of UCI transmission repetitions performed so far by the UE. The UE accumulates the individual effective numbers of each UCI transmission repetition performed so far for the specific UCI, where the accumulated amount could be called "current effective number of UCI transmission repetitions". One option would be to simply add the individual effective number of each past UCI repetition.

Moreover, the UE may then compare this current effective number of UCI repetitions with the target effective number. In one example, the UE then determines to transmit a further UCI repetition, in case the current effective repetition number is smaller than the target effective repetition number. Conversely, in case the current effective repetition number is equal to or larger than the target effective repetition number, there is no need for the UE to transmit a further UCI repetition.

The improved UCI transmission procedure as explained herein is further based on introducing a new parameter, i.e. the transmission-effectivity coefficient (abbreviated TEC in the following), e.g. for each component carrier configured for a UE. Different variants of the improved UCI transmission procedure regarding this new parameter will be explained in the following.

In one example, the TECs are initially determined by the base station and then provided to the UE, which in turn can determine the TEC from the received information.

The TEC can e.g. be provided per component carrier. The TEC is a parameter which reflects a transmission effectivity of an uplink transmission over the respective component carrier. Correspondingly, the base station can determine the TECs of the UE's component carriers, e.g. based on measurements or information that relate to the transmission effectivity. The performance of a PUCCH transmission over different carriers (or even over one carrier) can be different due to differences in the channel condition, the assigned transmission powers, the resource allocations, etc. The base station can determine the TECs, e.g. by estimation or measuring of the performance of the UCI transmission. The transmission effectivity can be e.g. one or a combination of a transmission reliability, a receiver signal quality or a transmit power.

One example of a transmission effectivity is the reliability of an uplink transmission via a component carrier. For instance, the base station may determine the reliability of an uplink transmission over a carrier by estimation of configured PUCCH resource or by measuring the correctly received UCI transmissions compared to the total of UCI transmissions. A simple relationship is that the higher the reliability of a component carrier, the higher the transmission effectivity efficient to be determined for that component carrier, and vice versa.

Another example of a transmission effectivity is the receiver signal quality when receiving an uplink transmission by the base station, e.g. using a corresponding measurement such as the RSSI. The base station can measure the signal quality of uplink transmissions received via the different component carriers from a UE and can thus determine a suitable transmission quality to be used as reflecting the transmission effectivity of the component carrier. A simple relationship is that the higher the received signal quality of a component carrier, the higher the transmission effectivity to be determined for that component carrier, and vice versa.

Still another example of a transmission effectivity is the transmit power used by the UE for an uplink transmission over a component carrier. The base station is aware of the transmit power used by the UE for a transmission over a component carrier, e.g. because the gNB typically is involved in the power control of the UE by sending commands to the UE to increase/decrease the UE's transmission power. The base station can thus take the transmit power as reflecting the transmission effectivity of the component carrier. A simple relationship is that the higher the transmit power used for transmission over a component carrier, the higher the transmission effectivity to be determined for that component carrier, and vice versa.

In one example, the TECs of the UE's component carriers are defined as relative coefficients, e.g. relative to a relative transmission effectivity of an uplink transmission over a reference component carrier. According to one example, the reference component carrier can be any carrier of the component carriers configured for the UE, e.g. the primary carrier, the secondary carrier, a carrier with a lowest sub-carrier spacing, or a carrier with the highest sub-carrier spacing.

The reference carrier for the TEC determination can be the same as the reference carrier for the carrier switching functionality. Alternatively, the reference carrier for the TEC determination can be determined separately and independently from the reference carrier of the carrier switching functionality.

For instance, the TEC for the reference carrier is defined as having the value 1, and the TECs for the remaining carrier(s) are determined relative to the reference carrier (e.g. the primary carrier, e.g. PCell, or the secondary carrier, e.g. SCell, or the carrier with the lowest or highest SCS) and relative to the TEC value 1 of the reference carrier.

This is illustrated based on an exemplary scenario with four component carriers, CC#0 - CC#3. The following table shows for the different reference carriers the resulting TECs, respectively assuming the same relative transmission effectivity of the component carriers.

|  | CC#0 | CC#1 | CC#2 | CC#3 |
|---|---|---|---|---|
| TEC (reference carrier CC#0) | 1 | 2 | 1 | ½ |
| TEC (reference carrier CC#1) | 1/2 | 1 | 1/2 | ¼ |
| TEC (reference carrier CC#2) | 1 | 2 | 1 | ½ |
| TEC (reference carrier CC#3) | 2 | 4 | 2 | 1 |

Correspondingly, the above TECs thus reflect the exemplary scenario, where a UCI transmission repetition over CC#1 is as effective as two UCI transmission repetitions over CC#0 or CC#2 and even as effective as four UCI transmission repetitions over CC#3.

Furthermore, the TECs can also depend on the PUCCH resources used for the transmission over the component carriers. The transmission effectivity may thus differ between different PUCCH resources available for one carrier, and thus the resulting TECs for different uplink resources can differ as well. In one exemplary implementation, the resulting TECs can thus be determined not only per component carrier, but also per uplink resource of a carrier. In the present disclosure, however, it is primarily assumed that the TECs are determined for all uplink resources of a component carrier (see above table) although it should be understood that the improved UCI transmission procedure is also applicable to TECs that are specific for a component carrier as well as for an uplink resource.

There are different ways in which the TECs are provided to the UE. In the above-described example, the base station is responsible for determining the TECs, and thus provides the suitable information on the determined TECs for all component carriers of the UE to the UE. The UE is thus semi-statically configured with the necessary TECs. In one implementation, a message of the radio resource control, RRC, protocol can be used. Based on the received information, the UE can then determine the TEC of the corresponding component carrier, for instance in the process of determining the individual effective number of a performed UCI transmission repetition.

The improved UCI transmission procedure as explained herein is further based on introducing a new parameter, i.e. the target effective number of UCI transmission repetitions (also called in the following target effective repetition number). Different variants of the improved UCI transmission procedure regarding this new parameter will be explained in the following.

In one example, the target effective repetition number is initially determined by the base station and then provided to the UE, which in turn can determine the target effective repetition number from the received information.

For instance, the target effective number of UCI transmission repetitions can be specific to the type of uplink control information, such that there is one (possibly different) target effective repetition number for each type, including one or more of a HARQ target effective repetition number, an SR target effective repetition number, and an CSI target effective repetition number.

Alternatively, one common target effective repetition number can be used, i.e. common to all types of uplink control information.

The target effective repetition number could be determined so as to achieve a performance demand for the UCI transmission, e.g. ensure that the uplink control information is received at the base station, e.g. with a sufficient reliability.

The base station can determine the target effective repetition number in different manners. The base station can take into account the channel quality of the component carriers in the uplink. In said connection, according to one example, the base station can take into account the transmission parameters of the UCI, such as one or more of the PUCCH format, the duration, transmission power, etc. These may vary between the different UCI types, e.g. between the HARQ feedback, SR and CSI.

The base station may also take into account the transmission-effectivity of the different carriers, and possibly also the corresponding transmission-effectivity coefficients, being the other new parameter used as part of the improved UCI transmission procedure (see e.g. above description). In addition or alternatively, the reliability requirements of the traffic type of the UCI can be used by the base station as well. In addition or alternative, the importance, such as the priority, of the traffic type of the UCI could be used by the base station; e.g. a higher target effective number can be set for a high-priority SPS downlink transmission (or SR or CQI), compared to a low-priority SPS downlink transmission (or SR or CQI).

There are different ways in which the target effective repetition number is provided to the UE. For instance, the HARQ-related target effective repetition number can be dynamically indicated in a resource scheduling message (e.g. DCI) received from the base station and scheduling the corresponding downlink transmission for which the HARQ feedback is to be transmitted. Another variant assumes that the downlink transmission is configured by a semi-persistent scheduling (SPS) configuration, and the target effective repetition number can be included in the corresponding SPS configuration of the downlink transmission.

On the other hand, the SR-related target effective repetition number can be included in the corresponding configuration information relating to the scheduling request. Thus, the configuration information does not only include other parameters related to how and when to transmit a scheduling request, but may also include the corresponding SR target effective repetition number. In one exemplary 5G compliant implementation, the SR target effective repetition number may be included in the RRC information element *SchedulingRequestConfig,* which is foreseen in 5G for configuring the parameters for the dedicated SR resources, such as a prohibit timer or a maximum number of SR transmissions

Furthermore, the CSI-related target effective repetition number can be included in the corresponding configuration information relating to the channel state information. Thus, the configuration information does not only include other parameters related to how and when to transmit channel state information, but may also include the corresponding CSI target effective repetition number. In one exemplary 5G compliant implementation, the CSI target effective repetition number may be included in the RRC information element *CSI-ReportConfig,* which is foreseen in 5G for configuring a periodic or semi-persistent report sent on PUCCH.

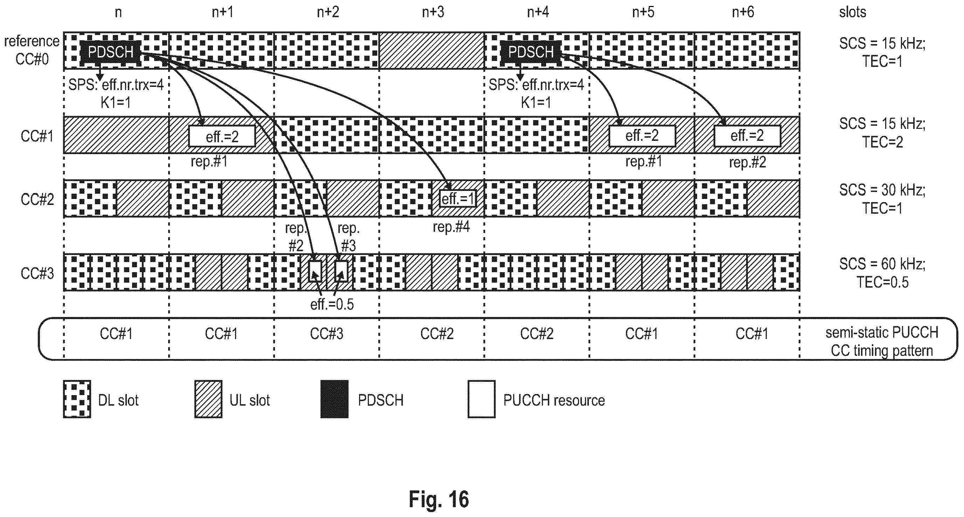

**Fig. 16** is used to explain an exemplary and simplified implementation of the improved UCI transmission procedure and illustrates several slots of different component carriers configured for a UE. In the exemplary scenario underlying Fig. 16, it is assumed that the UE is configured with four different component carriers. The TECs for the different carriers are CC#0 (1), CC#1 (2), CC#2 (1), CC#3 (0.5), as also illustrated at the right-hand side of Fig. 16. The semi-static timing pattern for the carrier switching functionality is based on using CC#0 as the reference carrier and is illustrated at the bottom of the figure, where slot n of the reference carrier is associated with CC#1, slot n+1 with CC#1, slot n+2 with CC#3, slot n+3 with CC#2, slot n+4 with CC#2, slot n+5 with CC#1 and slot n+6 with CC#1.

It is further assumed that the UE has to transmit HARQ feedback as the uplink control information for a downlink transmission (PDSCH) in slots n and n+4, wherein the downlink transmission is configured by SPS. The SPS configuration defines a target effective number of UCI transmission repetitions of 4 and furthermore defines a PDSCH-to-PUCCH offset K1=1 (i.e. the 1st transmission repetition of the HARQ feedback should be transmitted 1 slot after the corresponding downlink transmission).

Following the K1 parameter, the first UCI transmission repetition (see "rep.#1" in figure) is to be performed by the UE in slot n+1 of CC#0 (e.g. CC#0 being the reference carrier and the carrier carrying the PDSCH). Based on the semi-static timing pattern, reference slot n+1 is associated with the carrier CC#1 for the uplink transmission of the HARQ feedback, which is indeed possible because the time slot n+1 of the carrier CC#1 is an uplink slot. The UE then determines a suitable PUCCH resource of the carrier CC#1 and performs the HARQ feedback transmission repetition over component carrier CC#1 using the determined uplink resource.

As described above, the TEC of the component carrier CC#1 is 2, such that the 1st HARQ feedback repetition contributes with an individual effective number of 2, towards the target effective repetition number. Since the currently accumulated effective number of past transmission repetitions has not yet reached the target effective repetition number, the UE continues to perform HARQ feedback transmission repetitions in subsequent time slots. In the present scenario, the next opportunity for the UE to perform a UCI transmission repetition is in reference time slot n+2 , which is associated with the component carrier CC#3 according to the semi-static carrier switching timing pattern. During the reference time slot n+2, there are two uplink time slots (among the four) of component carrier CC#3, both of which can be used for performing two separate HARQ feedback transmission repetitions. Each of these two HARQ feedback transmission repetitions contributes with an individual effective number of 0,5 (see TEC of CC#3) towards the goal of reaching the target effective number of 4.

Overall, the UE determines that the accumulated current effective number is 3 (2+0,5+0,5), which is thus still below the target effective repetition number. A further, 4th HARQ feedback repetition in reference slot n+3 is thus necessary, which can be performed in CC#2 (see semi-static timing pattern), particularly in the second time slot (an uplink time slot) corresponding to the reference time slot n+3. The 4th HARQ feedback transmission repetition contributes with an individual effective number of 1 (see TEC of 1 for CC#2), such that the UE reaches the target effective repetition number of 4 in total. No further HARQ feedback transmission repetitions are thus necessary to be performed by the UE for the available UCI.

Following the just described procedure of the improved UCI transmission procedure, the UE equally performs the HARQ feedback transmission repetitions for the PDSCH received in slot n+4 of the reference component carrier CC#0. Considering the value K1=1 and the semi-static timing pattern which indicates CC#1 for the PUCCH carrier switching for slots n+5 and n+6, the UE can perform two HARQ feedback transmission repetitions. The two repetitions in slots n+5 and n+6 respectively contribute with an individual effective number of 2 (see TEC=2 of CC#1) and result in a total effective number of the HARQ feedback repetitions of 4, i.e. equal to the target effective repetition number. No further HARQ feedback repetitions are thus necessary for the HARQ feedback for the PDSCH of slot n+4.

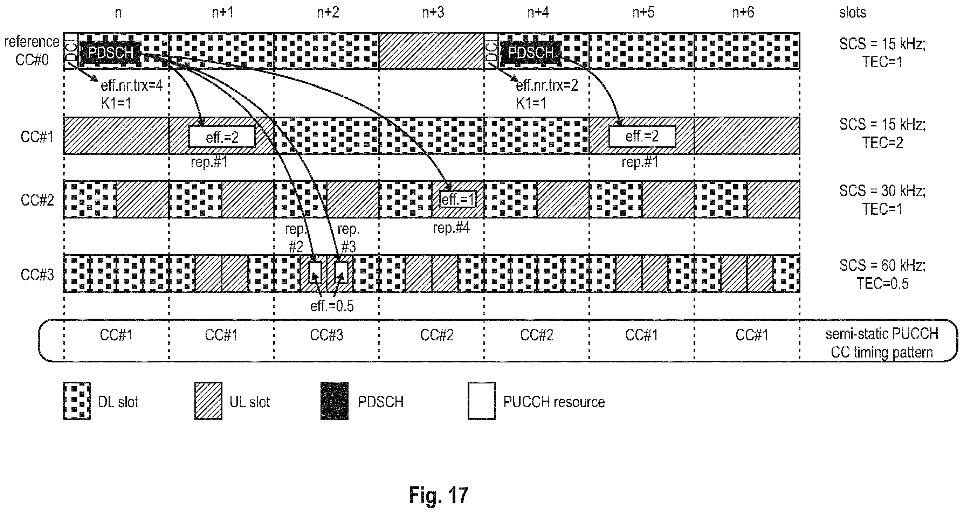

Another exemplary and simplified implementation of the improved UCI transmission procedure will be explained with reference to Fig. 17, which has quite similar assumptions as the scenario of Fig. 16. However, for the exemplary scenario Fig. 17, it is assumed that the downlink transmissions are scheduled by a resource scheduling message (DCI), which respectively indicates a target effective repetition number of 4 for the HARQ feedback relating to the PDSCH of slot n and indicates a target effective repetition number of 2 for the HARQ feedback relating to the PDSCH of slot n+4. The same value for the K1 parameter is assumed, as well as the same semi-static timing pattern for the uplink control information carrier switching. Also the TEC values of the different component carriers and the downlink/uplink slot configuration of the different component carriers remains the same as discussed for Fig. 16.

For the PDSCH in slot n, the same HARQ feedback transmission repetitions would be performed by the UE, because the same relevant parameters are assumed, including the TECs and the target effective repetition number. On the other hand, the DCI for the downlink transmission in slot n+4 dynamically indicates a different target effective repetition number, namely 2, such that a single transmission repetition in slot n+5 in CC#1 suffices to reach the target effective repetition number (see TEC=2 of CC#1).

In the above implementations and variants it was simply assumed that the UE determines a suitable uplink resource in the corresponding component carrier, without providing particular details. According to further aspects of the improved UCI transmission procedure (and its different variants and implementations), a more detailed implementation of the determination of a suitable uplink resource of the component carrier can be adopted.

Generally, in one example, an uplink resource may be defined based on a PUCCH format, a first symbol, a duration, a physical resource block offset, and a cyclic shift index set of the PUCCH transmission.

According to one exemplary implementation of the uplink resource determination, the uplink resource is determined based on an uplink resource indication, provided to the UE. The uplink resource indication allows the UE to determine a suitable uplink resource in the previously-determined component carrier. In one example, an association between different uplink resource indications and different uplink resources for one or more of the carriers configured for the UE is stored in the UE. Then, the UE selects the corresponding uplink resource from the stored association based on the uplink resource indication and the component carrier over which the UCI is to be transmitted.

An exemplary association can be defined in the form of a table, an example being provided in the following **Table 1**:

**Table 1**: association between uplink resource indications and CC-specific uplink resources

| Uplink resource indication | CC#0 | CC#1 |
|---|---|---|
| 0 | P00 | P10 |
| 1 | P01 | P11 |
| 2 | P02 | |
| 3 | P03 | |

As apparent from Table 1, a 2-bit uplink resource indication with four different values (0,1,2,3) is exemplarily assumed, and a UE configured with two different component carriers, CC#0 and CC#1. Further, it is assumed that four different uplink resources P00-P03 exist for the first component carrier CC#0, and two uplink resources P10, P11 exist for the second component carrier CC#1. Correspondingly, when an uplink resource indication of value 0 is indicated, the UE determines uplink resource P00 in case carrier CC#0 is to be used or determines uplink resource P10 in case carrier CC#1 is to be used for transmitting the UCI according to the carrier switching scheme. This can be done in a corresponding manner for each UCI transmission repetition (until the target effective number of UCI transmission repetitions is reached).

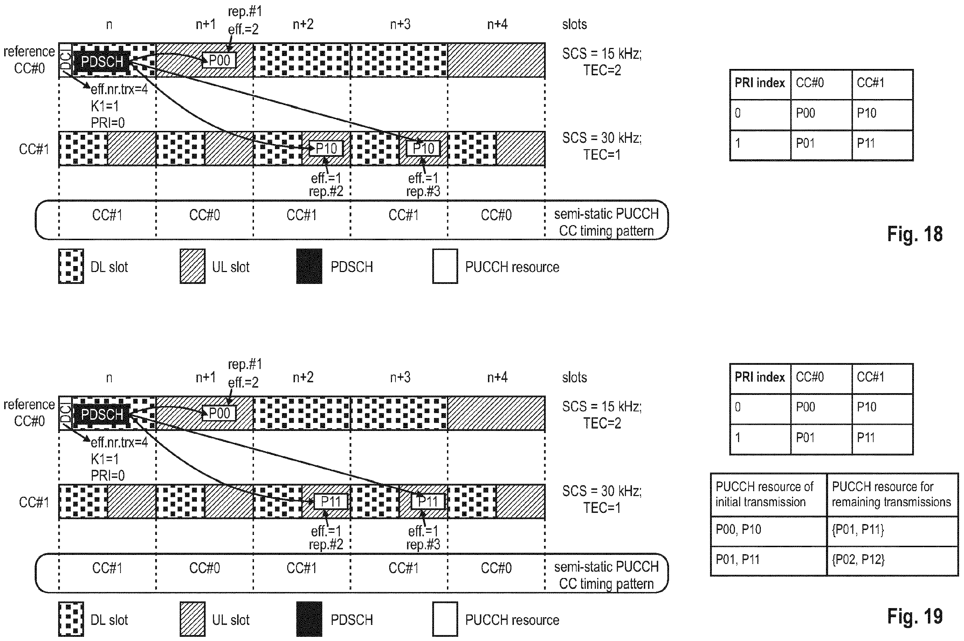

An exemplary implementation of this uplink resource determination procedure is illustrated in Fig. 18, which illustrates several slots of two component carriers, CC#0 and CC#1, configured for the UE. The TECs of these two component carriers are 2 for CC#0 and 1 for CC#1 (also illustrated at the right-hand side of the figure). The example carrier switching timing pattern is illustrated at the bottom of the figure, assuming component carrier CC#0 as the reference component carrier. One DCI-scheduled downlink transmission is assumed to occur in slot n, for which HARQ feedback information (as the UCI) is to be transmitted by the UE. Fig. 18 also illustrates an association of different uplink resource indications (PRI; PUCCH Resource Indicator) with CC-specific uplink resources, thereby associating the PRI=0 with uplink resource P00 of CC#0 and with uplink resource P10 of CC#1, and associating the PRI=1 with uplink resource P10 of CC#0 and with uplink resource P11 of CC#1.

| PRI index | CC#0 | CC#1 |
|-----------|------|------|
| 0 | P00 | P10 |
| 1 | P01 | P11 |

The DCI of Fig. 18 is exemplarily assumed to indicate a target effective repetition number of 4, a K1-value of 1, and a PRI of 0. Therefore, the uplink resources that can be used by the UE is P00 for CC#0 and P10 for CC#1. The next uplink transmission opportunity for transmitting the HARQ feedback for the downlink transmission is the uplink time slot n+1, which is associated with carrier CC#0 according to the semi-static timing pattern. Correspondingly, the uplink resource P00 of CC#0 is determined according to the illustrated association and then used by the UE to transmit the first HARQ feedback transmission repetition.

Further UCI transmission repetitions need to be performed by the UE, because the individual effective number contributed by the first UCI repetition is 2, i.e. smaller than the target effective repetition number of 4. For the remaining second and third HARQ feedback transmission repetitions, the UE determines that CC#1 is to be used for the UCI transmission, according to the reference time slots n+2 and n+3 and the carrier switching timing pattern. The UE determines the corresponding uplink resource also based on the same illustrated association already used for the first HARQ feedback transmission repetition and thus derives to use the uplink resource P10 based on the PRI=0 received in the DCI. Accordingly, the UE transmits the second and third HARQ feedback via the uplink resource P10 of CC#1.

According to one exemplary implementation of the uplink resource determination, the uplink resource determination can be implemented in a same or similar manner as described above for the current 5G NR communication system, see particularly the sections *"Uplink control information in 5G NR, PUCCH"* and *"SPS and UCI — HARQ-ACK transmission"*. Consequently, for each UCI transmission repetition the same way is used by the UE to determine the uplink resource of the component carrier.

Moreover, the uplink resource indication can be obtained by the UE in different manners. For instance, assuming that the UCI is HARQ feedback information, the uplink resource indication can be dynamically indicated in a resource scheduling message (e.g. DCI) received from the base station and scheduling the corresponding downlink transmission for which the HARQ feedback is to be transmitted (see e.g. Fig. 18). Another variant assumes that the downlink transmission is configured by a semi-persistent scheduling (SPS) configuration, in which case the uplink resource indication can be included in the corresponding SPS configuration of the downlink transmission.

An improved uplink resource determination procedure will be explained separately in the following. This improved uplink resource determination procedure distinguishes between the first UCI transmission repetition and the subsequent UCI transmission repetitions (i.e. subsequent to the first UCI transmission repetition) for determining the uplink resource. In particular, the abovepresented association between an uplink resource indicator and different uplink resources would only be used in connection with the first UCI transmission repetition. Correspondingly, the UE determines the uplink resource for this first UCI transmission repetition based on the first association, as already explained above, e.g. in connection with **Fig. 18.**

On the other hand, for any subsequent UCI transmission repetition in the series, a different second association is used, which associates different uplink resources that were used for the first UCI transmission repetition with different uplink resources of the one or more component carriers configured for the UE.

An example of such a second association can be defined in the form of a table and could be e.g. as follows:

| PUCCH resource of first UCI repetition | PUCCH resource for subsequent UCI repetitions |
|---|---|
| P00 | {P00, P10} |
| P01 | {P01, P11} |
| P02 | {P03} |
| P03 | {P10] |
| P10 | {P00, P10} |
| P11 | {P11} |

As apparent therefrom, this second association allows a very flexible way of configuring uplink resources to be used for subsequent UCI transmission repetitions. For instance, this allows to configure different uplink resources to be used for the subsequent UCI transmission repetition compared to the initial UCI transmission repetition; for instance, using uplink resource P02 for the initial UCI repetition, and then using P03 for any subsequent UCI repetition. Furthermore, the improved resource uplink resource determination procedure also allows to flexibly disable carrier switching depending on the uplink resource used for the initial UCI transmission repetition; for instance, when having used the uplink resource P11 for the initial UCI repetition, carrier switching to another carrier CC#0 is not possible, rather the same component carrier CC#1 and in this exemplary case even the same uplink resource P11 are to be used by the UE for any subsequent UCI transmission repetition.

An exemplary implementation of the improved uplink resource determination procedure will be explained with reference to **Fig. 19**. As apparent therefrom, the same underlying time slot structure, the same TECs and component carriers is assumed as for the scenario of Fig. 18. Furthermore, also the DCI indicates the same parameters as the DCI assumed for Fig. 18. The first association is assumed to be the same as well. However, the following second association is assumed for being used in connection with determining the uplink resource of a non-initial UCI transmission repetition:

| PUCCH resource of first UCI repetition | PUCCH resource for subsequent UCI repetitions |
|---|---|
| P00, P10 | {P01, P11} |
| P01, P11 | {P02, P12} |

As apparent therefrom, the second association is defined so as to benefit from the flexibility of using a different uplink resource for subsequent UCI transmission repetitions than was used for the initial UCI transmission repetition. In particular, initial uplink resources P00 and P10 are associated with the different subsequent uplink resources P01 and P11, and the initial uplink resources P01 and P11 are associated with the different subsequent uplink resources P02 and P12.

Correspondingly, Fig. 19 differs from Fig. 18 in that a different uplink resource P11 is used for the 2nd and 3rd HARQ feedback transmission in slots n+2 and n+3.

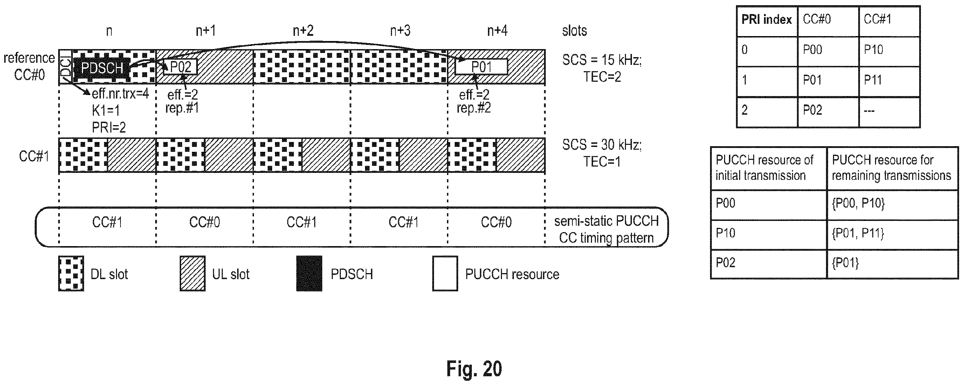

Another exemplary implementation of the improved uplink resource determination procedure will be explained with reference to **Fig. 20.** The first and second associations are illustrated in Fig. 20. It is furthermore assumed that the DCI indicates a PRI of 2, such that the UE, based on the first association (top table of Fig. 20), determines that for the first UCI transmission repetition to be performed in slot n+1 in CC#0, the uplink resource P02 is to be used. This particular first association only allows one carrier, here CC#0, to be used for the first UCI transmission repetition. For the subsequent, second, UCI transmission repetition, the UE considers the second association (bottom table of Fig. 20) and thus determines that uplink resource P01 of the first carrier CC#0 is to be used, because the uplink resource P02 was used for the initial UCI repetition. Correspondingly, the UE has to skip time slots n+2 and n+3, which are associated with CC#1 that is not to be used for any subsequent UCI transmission repetition. Rather, for reference slot n+4, CC#0 is again allowed to be used for the UCI transmission (according to the carrier switching timing pattern), and the UE accordingly performs the second UCI transmission repetition using the determined uplink resource P01 of CC#0.

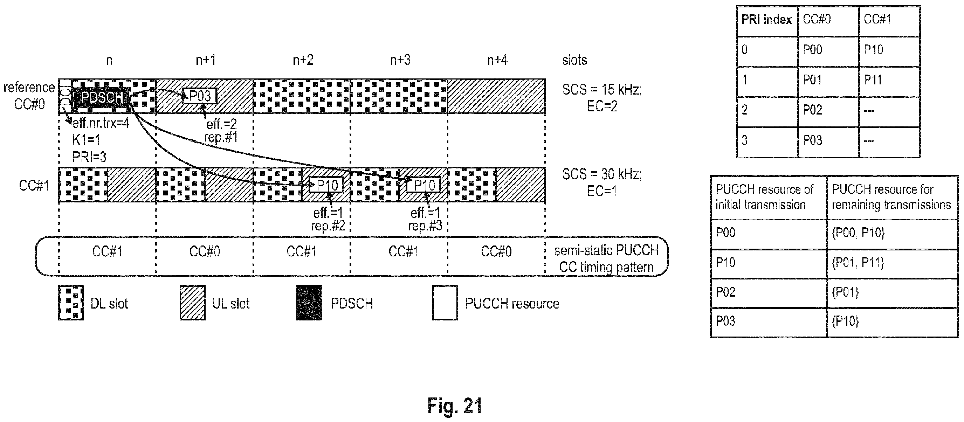

Still another exemplary implementation of the improved uplink resource determination procedure will be explained with reference to **Fig. 21.** The first and second associations are illustrated in Fig. 21. It is furthermore assumed that the DCI indicates a PRI of 3, such that the UE, based on the first association (top table of Fig. 21), determines that for the first UCI transmission repetition to be performed in slot n+1 in CC#0, the uplink resource P03 is to be used. Again, this particular first association only allows one carrier, here CC#0, to be used for the first UCI transmission repetition.

For the subsequent, second, UCI transmission repetition, the UE considers the second association (bottom table of Fig. 21) and thus determines that uplink resource P10 of the second carrier CC#1 is to be used, because the uplink resource P03 was used for the initial UCI repetition. In reference time slots n+2 and n+3, the carrier switching timing pattern indicates that component carrier CC#1 is to be used, such that the UE accordingly performs the second and third UCI transmission repetitions using the determined uplink resource P10 of CC#1.

In the following a further improvement of the improved UCI transmission procedure is presented, which relates to the determination of the transmission-effectivity coefficient of the component carriers. The present improved UCI transmission procedure is primarily to be used when the UE jointly operates the uplink repetition functionality and the UCI carrier switching functionality.

In addition, the UE can also be configured for performing the uplink repetition functionality alone, i.e. without the UCI carrier switching functionality. In said case, the UE can be configured with a parameter (e.g. called $N_{rep}$) that indicates the target number of UCI transmission repetitions, to be performed when transmitting the UCI over a single carrier. Put differently, the UE is supposed to perform $N_{rep}$ transmission repetitions of the UCI over a single carrier. This parameter $N_{rep}$ can be provided per component carrier. In one example, this parameter $N_{rep}$ can be semi-statically defined by the base station for the UE, e.g. in connection with uplink control information transmission configurations. One exemplary implementation compliant with the 5G NR communication system has been explained above (see section "PUCCH Repetitions"), where the parameter *nrofslots* can be used as $N_{rep}$ to indicate the number of slots with the same PUCCH.

This single-CC number of UCI transmission repetitions $N_{rep}$ is different to the newly-introduced target effective number of UCI transmission repetitions in that it is interpreted differently by the UE, namely $N_{rep}$ is interpreted as an actual number of transmissions, while the target effective repetition number is interpreted as an effective number that can be the same, smaller or larger than the actual number of transmission repetitions that the UE performed.

According to this additional improvement however, this parameter $N_{rep}$ is used to determine the transmission-effectivity coefficient (TEC) for each component carrier. In particular, the parameter $N_{rep}$ can be understood as reflecting a reliability of uplink transmissions via the component carrier. For instance, the higher the parameter $N_{rep}$, the less reliable the uplink transmission over said component carrier can be assumed, because more repetitions are needed. Correspondingly, the lower the parameter $N_{rep}$, the more reliable the uplink transmissions over said component carrier can be assumed, because less repetitions are needed. Therefore, the UE can determine the TECs of the component carriers from the respective parameters $N_{rep}$ that have been configured before for each carrier. For instance, the TEC of a component carrier is inversely proportional to the corresponding parameter $N_{rep}$ configured for said component carrier. An exemplary calculation can be that $TEC_{cc} = 1 / N_{rep\_cc}$. Optionally, the TECs can then be further transformed to represent relative values.

This above-discussed further improvement allows to reduce the signaling overhead and processing, because it is not necessary to determine and signal the new parameter TEC for each component carrier. Rather, an already defined parameter (e.g. nrofslots) is reused by the UE and the base station to derive the TECs of the different component carriers. From the perspective of the 5G NR communication standards, less changes to the standard(s) are needed.

A further variant assumes that the actual number of UCI transmission repetitions is not only configured by the semi-static parameter $N_{rep}$, but that the base station may dynamically indicate the actual number of UCI transmission repetitions, e.g. in a DCI for a PDSCH (see e.g. Rel. 17 discussion in section "PUCCH Repetitions"). In said case, the semi-statically configured parameter $N_{rep}$ is ignored, and instead the dynamically indicated parameter is used for determining the actual number of UCI transmission repetitions when operating in a single-carrier UCI transmission. Furthermore, in this further variant, the dynamically indicated parameter is also used for determining the target effective number of UCI transmission repetitions.

Another improvement will be explained in the following, which can be used separately from or in combination with the above-explained improved UCI transmission procedure (and its different variants and implementations).

In particular, it is assumed that a UE requires a time gap before it can transmit over a new carrier in order to retune its radio frequency circuitry, assuming that the UE cannot transmit over multiple carriers simultaneously. For instance, there exist UEs with reduced capabilities, called RedCap UEs, where the required time gap could be quite large. According to this further improvement, the UCI transmission procedure additionally takes into account a time requirement according to which a UCI transmission repetition over a first component carrier, subsequent to a previous UCI transmission repetition over a second, different, component carriers requires a minimum time gap in between.

The UE, when determining to perform a UCI transmission repetition, also takes into account whether the available uplink resource opportunity of a component carrier complies with the above-described time requirement. If the uplink resource opportunity does not comply with the time requirement, the UE cannot use said opportunity and proceeds to process the next uplink resource opportunity. On the other hand, if the uplink resource opportunity does comply with the time requirement, the UE can use said opportunity to transmit the UCI.

In one example variant, the time requirement primarily depends on the capabilities of the UE, and may be part of the capability information stored in the UE. Then, the UE provides suitable information on this time requirement to the base station, so both entities have the same understanding. For instance, a minimum time gap of 500 μs can be assumed for changing the carrier for the UCI transmission.

In a further exemplary variant, the base station then uses the capability information on the time requirement and can further define a different, e.g. more stringent, time requirement, and configures the UE accordingly, e.g. in a message of the RRC protocol. Correspondingly, the UE, when receiving such an additional time requirement configuration from the base station, ignores its own time requirement from the capability information, but rather follows the time requirement provided by the base station.

In further variants, the time requirement can apply commonly to all the component carriers of the UE.

Alternatively, the time requirement may be specific to particular component carriers, such as specific to the component carrier from which the UE switches to another component carrier, i.e. specific to the source carrier. Correspondingly, different time requirements could apply, depending on which component carrier the UE is switching from when attempting the subsequent UCI transmission repetition.

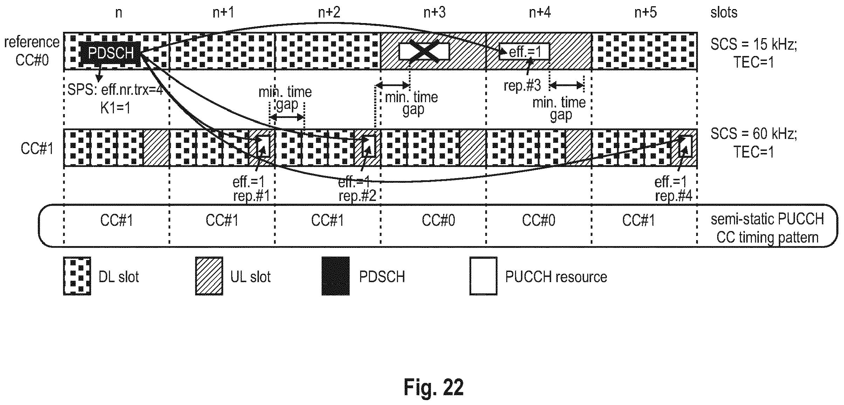

**Fig. 22** illustrates an exemplary implementation of this improvement, when being applied together with the above-described improved UCI transmission procedure (i.e. using the target effective repetition number and the TECs of different component carriers). As apparent therefrom, the time requirement is illustrated from the end of the uplink resource used for the UCI transmission.

Assuming the exemplary scenario of Fig. 22, the first and second UCI transmission repetitions do not have to fulfil the time requirement, specifically because the second UCI transmission repetition is performed over the same CC as the first UCI transmission repetition, here CC#1. On the other hand, the UE processes the uplink transmission opportunity in slot n+3 in the different CC#0, by taking into account the time requirement. The UE then determines that the time requirement is not fulfilled, because the corresponding uplink resource of the UCI transmission opportunity in slot n+3 in CC#0 starts within the minimum time gap and not after.

Correspondingly, the UE proceeds to process the next UCI transmission opportunity, which is in slot n+4 of CC#0. In this case, the time requirement, compared to the previous UCI transmission repetition of n+2, is fulfilled, and the UE can transmit the 3rd UCI transmission repetition using said uplink resource of slot n+4.

The UE needs to perform still another UCI transmission repetition to reach the target effective repetition number of 4 and thus processes the UCI transmission opportunity of slot n+5 in CC#1. The UE would need to switch to another component carrier (from CC#0 for the 3rd UCI transmission repetition), and thus considers the time requirement during the operation. The UE then however determines that the time requirement is fulfilled and can thus proceed to perform the UCI transmission repetition in the corresponding uplink resource of CC#1 in slot n+5.

*Further Aspects*

According to a first aspect, a user equipment, is provided that includes the following. A processing circuitry of the UE determines a target effective number of transmission repetitions for uplink control information, UCI. A transmitter performs one or more transmission repetitions for the available UCI until the target effective number of UCI transmission repetitions is reached. For each transmission repetition,

- the processing circuitry determines one component carrier of a plurality of component carriers configured for the UE and determines an uplink resource of the determined component carrier, and
- the transmitter transmits the available uplink control information using the determined uplink resource of the determined component carrier.

Each performed UCI transmission repetitions contributes with an individual effective number towards the target effective number of UCI transmission repetitions, the effective number of each UCI transmission repetition depending on a transmission-effectivity coefficient relating to the component carrier used for performing the respective UCI transmission repetition.

According to a second aspect provided in addition to the first aspect, the processing circuitry determines whether or not to perform a transmission repetition of the available uplink control information, based on whether the target effective number of transmission repetitions is reached by past transmission repetitions of the available uplink control information. In an optional implementation, the processing circuitry performs a determination as to whether or not to perform a transmission repetition of the uplink control information by:

- determining a current effective number of transmission repetitions of the uplink control information, by adding the individual effective number of each of the past transmission repetitions of the available uplink control information,
- comparing the determined current effective number of UCI transmission repetitions against the target effective number of UCI transmission repetitions,
- determining to perform an UCI transmission repetition, in case the determined current effective number of UCI transmission repetitions is smaller than the target effective number of UCI transmission repetitions.

According to a third aspect provided in addition to the first or second aspect, the processing circuitry performs the determination of the target effective number of UCI transmission repetitions:

- in case the uplink control information is feedback information of a re-transmission protocol relating to a downlink transmission, based on information included in a resource scheduling message, scheduling the downlink transmission, or based on information included in a semi-persistent downlink resource configuration, usable for the downlink transmission, and
- in case the uplink control information is a scheduling request, SR, based on information included in an SR configuration,
- in case the uplink control information is channel state information, CSI, based on information included in a CSI configuration.

According to a fourth aspect provided in addition to one of the first to third aspects, the transmission-effectivity coefficient of a component carrier is a value indicating a relative transmission effectivity for an uplink transmission over said component carrier, relative to another relative transmission effectivity for an uplink transmission over a reference component carrier. In an optional implementation, the reference component carrier is one of a primary carrier, a secondary carrier, a carrier with a lowest sub-carrier spacing, and a carrier with a highest subcarrier spacing. In a further optional implementation thereof, the transmission effectivity relates to one or more of a transmission reliability of the uplink transmission, a receiver signal quality for receiving an uplink transmission at a base station, a transmission power used by the UE for an uplink transmission over the component carrier. Still another optional implementation thereof, a receiver of the UE receives information on the transmission-effectivity coefficients for the plurality of component carriers from a base station serving the UE, optionally in a message of a Radio Resource Control, RRC, protocol, and wherein the processing circuitry determines the transmission-effectivity coefficient of a component carrier from the received information.

According to a fifth aspect, provided in addition to one of the first to fourth aspects, the UE is configured with a semi-statically-configured parameter indicating a number of transmission repetitions of uplink control information for a component carrier, to be used by the UE when performing transmission repetitions using only one component carrier. The processing circuitry determines the transmission-effectivity coefficient of a component carrier to be inversely proportional to the value indicated by the semi-statically configured parameter of the respective component carrier. In an optional implementation thereof, the semi-statically-configured parameter is a different parameter than the target effective number of UCI transmission repetitions. Instead another optional implementation thereof, a receiver of the UE receives a resource scheduling message, including a dynamically-configured parameter indicating the number of transmission repetitions of uplink control information relating to the resource scheduling message, to be used by the UE when performing transmission repetitions using only one component carrier instead of the semi-statically-configured parameter. The processing circuitry determines the target effective number of UCI transmission repetitions to be equal to the dynamically-configured parameter.

According to a sixth aspect, provided in addition to one of the first to fifth aspects, The processing circuitry determines a timing for an UCI transmission repetition, considering a time requirement according to which an UCI transmission repetition over a first component carrier subsequent to a previous UCI transmission repetition over a second, different, component carrier requires a minimum time gap in between. In an optional implementation thereof, a receiver of the UE receives information on the time requirement from a base station serving the UE, optionally in a message of a Radio Resource Control, RRC, protocol. Still further optional implementation, the time requirement is part of a capability of the UE, and the transmitter transmits information on the time requirement to a base station serving the UE. Optionally, the time requirement applies commonly to the plurality of component carriers configured for the UE or the time requirement applies to one of the plurality of component carriers.

According to a seventh aspect provided in addition to one of the first to sixth aspects, the uplink control information is one or more of:

- feedback information of a re-transmission protocol, such as a Hybrid Automatic Repeat Request, HARQ, protocol,
- a scheduling request, SR, and
- channel state information, CSI.

According to an eighth aspect provided in addition to one of the first to seventh aspects, the processing circuitry performs the determination of the component carrier for transmission of the uplink control information:

- by determining an uplink timing for transmission of the UCI, determining a reference time slot of a reference component carrier corresponding to the determined uplink timing, and then determining a component carrier for transmission of the UCI, based on an uplink carrier timing pattern and the determined reference time slot,

  ◦ optionally wherein the uplink carrier timing pattern defines a pattern of one component carrier per reference time slot, such that each time slot of the reference component carrier is associated with one component carrier, among the plurality of component carriers configured for the UE.

Alternatively, the processing circuitry performs the determination of the component carrier for transmission of the uplink control information:

• based on a component carrier indication relating to a downlink transmission, for which feedback information of a re-transmission protocol is to be transmitted as the uplink control information,

  ◦ optionally wherein the component carrier indication is included in a resource scheduling message, which is received from a base station serving the UE and which schedules the downlink transmission, or is indicated by a semi-persistent downlink configuration usable for the downlink transmission.

In an optional implementation of the two alternatives, the determined component carrier for transmitting the uplink control information can be a different component carrier among the plurality of component carriers depending on the timing of transmitting the uplink control information, and optionally wherein the determined component carrier can be a different component carrier than a component carrier via which the UE has received a downlink transmission for which feedback information of a re-transmission protocol is to be transmitted as the uplink control information.

According to a ninth aspect provided in addition to any one of the first to eight aspects, the processing circuitry performs the determination of the uplink resource of the determined component carrier for each of the UCI transmission repetitions based on the determined component carrier, based on an uplink resource indication relating to the uplink control information and based on a first association between different uplink resource indications and different uplink resources of one or more component carriers among the plurality of component carriers configured for the UE. In an optional implementation thereof, the uplink resource indication is included in a resource scheduling message, which is received from a base station serving the UE and which schedules a downlink transmission for which feedback information of a re-transmission protocol is to be transmitted as the uplink control information. Alternatively, the uplink resource indication is indicated by a semi-persistent downlink configuration usable for the downlink transmission.

According to a tenth aspect provided in addition to any one of the first to eighth aspects, - for a first UCI transmission repetition in a series of UCI transmission repetitions - the processing circuitry performs the determination of the uplink resource of the determined component carrier, based on the determined component carrier, based on an uplink resource indication and based on a first association between different uplink resource indications and different uplink resources of one or more component carriers among the plurality of component carriers configured for the UE. A second association is applicable to any subsequent UCI transmission repetition in the series of UCI transmission repetitions and associates different uplink resources usable for the first-in-a-series UCI transmission repetition with different uplink resources of one or more component carriers among the plurality of component carriers configured for the UE. For any of the subsequent-in-a-series UCI transmission repetitions, the processing circuitry performs the determination of the uplink resource of the determined component carrier based on the second association, based on the uplink resource used for the first-in-a-series UCI transmission repetition, and based on the determined component carrier. In an optional implementation thereof, the uplink resource indication is included in a resource scheduling message, which is received from a base station serving the UE and which schedules a downlink transmission for which feedback information of a re-transmission protocol is to be transmitted as the uplink control information. Alternatively, the uplink resource indication is indicated by a semi-persistent downlink configuration usable for the downlink transmission.

According to an eleventh aspect, a method is provided comprising the following steps performed by a user equipment, UE

determining a target effective number of transmission repetitions for uplink control information, UCI, that is available for transmission,

performing one or more transmission repetitions for the available uplink control information until the target effective number of UCI transmission repetitions is reached,

wherein each transmission repetition of the available uplink control information includes:

• determining one component carrier of a plurality of component carriers configured for the UE and determining an uplink resource of the determined component carrier, and

- transmitting the available uplink control information using the determined uplink resource of the determined component carrier,

wherein each of the performed UCI transmission repetitions contributes with an individual effective number towards the target effective number of UCI transmission repetitions, wherein the effective number of each UCI transmission repetition depends on a transmission-effectivity coefficient relating to the component carrier used for performing the respective UCI transmission repetition.

According to a twelfth aspect, a base station is provided comprising the following. Processing circuitry of the base station determines a target effective number of transmission repetitions for uplink control information, UCI, to be transmitted by a user equipment using an uplink resource of one of a plurality of component carriers configured for the UE. The processing circuitry determines, for each of the plurality of component carriers, a transmission-effectivity coefficient relating to the respective component carrier usable by the UE for performing the respective UCI transmission repetition. A transmitter of the base station transmits, to the UE, information on the determined target effective number of UCI transmission repetitions and information on the determined transmission-effectivity coefficient for each component carrier. A receiver of the base station receives, from the UE, UCI transmission repetitions, respectively via an uplink resource of one of the plurality of component carriers, until the target effective number of UCI transmission repetitions is reached. Each of the received UCI transmission repetitions contributes with an individual effective number towards the target effective number of UCI transmission repetitions, wherein the effective number of each UCI transmission repetition depends on a transmission-effectivity coefficient relating to the component carrier via which the respective UCI transmission repetition is received.

According to a thirteenth aspect, provided in addition to the twelfth aspect, the processing circuitry determines whether or not a transmission repetition of the available uplink control information will be received from the UE, based on whether the target effective number of transmission repetitions is reached by past received transmission repetitions of the available uplink control information. In an optional implementation thereof, the processing circuitry performs a determination as to whether or not a UCI transmission repetition is received by:

- determining a current effective number of transmission repetitions of the uplink control information, by adding the individual effective number of each of the past received transmission repetitions of the available uplink control information,

- comparing the determined current effective number of received UCI transmission repetitions against the target effective number of UCI transmission repetitions,

- determining that an UCI transmission repetition will be received, in case the determined current effective number of UCI transmission repetitions is smaller than the target effective number of UCI transmission repetitions.

According to a fourteenth aspect, provided in addition to the twelfth of thirteenth aspect, the transmitter performs the transmission of the information on the target effective number of UCI transmission repetitions:

- in case the uplink control information is feedback information of a re-transmission protocol relating to a downlink transmission, in a resource scheduling message, scheduling the downlink transmission, or in a semi-persistent downlink resource configuration, usable for the downlink transmission, and

- in case the uplink control information is a scheduling request, SR, in an SR configuration,

- in case the uplink control information is channel state information, CSI, in a CSI configuration.

According to a fifteenth aspect, provided in addition to any one of the twelfth to fourteenth aspects, the transmission-effectivity coefficient of a component carrier is a value indicating a relative transmission effectivity for an uplink transmission over said component carrier, relative to another relative transmission effectivity for an uplink transmission over a reference component carrier, optionally wherein the reference component carrier is one of a primary carrier, a secondary carrier, a carrier with a lowest sub-carrier spacing, and a carrier with a highest sub-carrier spacing. In an optional implementation thereof, the processing circuitry determines the transmission effectivity based on one or more of a transmission reliability of the uplink transmission, a receiver signal quality for receiving an uplink transmission, a transmission power used by the UE for an uplink transmission over the component carrier.

According to a sixteenth aspect, provided in addition to one of the twelfth to fifteenth aspects, the processing circuitry determines a timing for an UCI transmission repetition of the UE, considering a time requirement according to which an UCI transmission repetition over a first component carrier subsequent to a previous UCI transmission repetition over a second, different, component carrier requires a minimum time gap in between. In an optional implementation thereof, the processing circuitry determines the time requirement, and the transmitter transmits information on the time requirement to the UE, optionally in a message of a Radio Resource Control, RRC, protocol. In a further optional implementation thereof, the receiver receives information on the time requirement from the UE, indicated as part of a capability of the UE. In a further optional implementation thereof, the time requirement applies commonly to the plurality of component carriers configured for the UE or the time requirement applies to one of the plurality of component carriers.

According to a seventeenth aspect, provided in addition to one of the twelfth to sixteenth aspects, the processing circuitry performs the determination of the component carrier used by the UE for transmission of the uplink control information:

- by determining an uplink timing for transmission of the UCI, determining a reference time slot of a reference component carrier corresponding to the determined uplink timing, and then determining a component carrier for transmission of the UCI, based on an uplink carrier timing pattern and the determined reference time slot,

  ○ optionally wherein the uplink carrier timing pattern defines a pattern of one component carrier per reference time slot, such that each time slot of the reference component carrier is associated with one component carrier, among the plurality of component carriers configured for the UE.

Alternatively, the processing circuitry performs the determination of the component carrier used by the UE for transmission of the uplink control information:

- based on a component carrier indication relating to a downlink transmission, for which feedback information of a re-transmission protocol is to be transmitted by the UE as the uplink control information,

  ○ optionally wherein the component carrier indication is included in a resource scheduling message, transmitted by the base station to the UE and which schedules the downlink transmission, or is indicated by a semi-persistent downlink configuration usable for the downlink transmission.

In an optional implementation of both alternatives, the determined component carrier for transmitting the uplink control information can be a different component carrier among the plurality of component carriers depending on the timing of transmitting the uplink control information, and optionally wherein the determined component carrier can be a different component carrier than a component carrier via which the UE has received a downlink transmission for which feedback information of a re-transmission protocol is to be transmitted as the uplink control information. According to a eighteenth aspect, provided in addition to one of the twelfth to seventeenth aspects, the processing circuitry determines a first association between different uplink resource indications and different uplink resources of one or more component carriers among the plurality of component carriers configured for the UE, and the transmitter transmits information on the first association to the UE. The processing circuitry determines one specific uplink resource indicator, from the different uplink resource indications of the first association, and the corresponding uplink resource for a first UCI transmission repetition in a series of UCI transmission repetitions to be performed by the UE, and the transmitter transmits the specific uplink resource indicator to the UE. The processing circuitry determines a second association that is applicable to any subsequent UCI transmission repetition in the series of UCI transmission repetitions to be performed by the UE. The second association associates different uplink resources usable for the first-in-a-series UCI transmission repetition with different uplink resources of one or more component carriers among the plurality of component carriers configured for the UE. The processing circuitry determines - for any of the subsequent-in-a-series UCI transmission repetitions - the uplink resource of the determined component carrier based on the second association, based on the uplink resource used by the UE for the first-in-a-series UCI transmission repetition, and based on the determined component carrier. In an optional implementation thereof, the specific uplink resource indication is included in a resource scheduling message, which is transmitted by the base station to the UE and which schedules a downlink transmission for which feedback information of a re-transmission protocol is to be transmitted by the UE as the uplink control information. Alternatively, the uplink resource indication is indicated by a semi-persistent downlink configuration usable for the downlink transmission

According to a nineteenth aspect, the method is provided comprising the following steps performed by a base station:

determining a target effective number of transmission repetitions for uplink control information, UCI, to be transmitted by a user equipment using an uplink resource of one of a plurality of component carriers configured for the UE,

determining, for each of the plurality of component carriers, a transmission-effectivity coefficient relating to the respective component carrier usable by the UE for performing the respective UCI transmission repetition,

transmitting, to the UE, information on the determined target effective number of UCI transmission repetitions and information on the determined transmission-effectivity coefficient for each component carrier,

receiving, from the UE, UCI transmission repetitions, respectively via an uplink resource of one of the plurality of component carriers, until the target effective number of UCI transmission repetitions is reached,

wherein each of the received UCI transmission repetitions contributes with an individual effective number towards the target effective number of UCI transmission repetitions, wherein the effective number of each UCI transmission repetition depends on a transmission-effectivity coefficient relating to the component carrier via which the respective UCI transmission repetition is received.

According to a 20th aspect, an integrated circuit is provided which controls a process of a user equipment, the process comprising the following steps performed by the user equipment:

determining a target effective number of transmission repetitions for uplink control information, UCI, that is available for transmission,

performing one or more transmission repetitions for the available uplink control information until the target effective number of UCI transmission repetitions is reached,

wherein each transmission repetition of the available uplink control information includes:

- determining one component carrier of a plurality of component carriers configured for the UE and determining an uplink resource of the determined component carrier, and

- transmitting the available uplink control information using the determined uplink resource of the determined component carrier,

wherein each of the performed UCI transmission repetitions contributes with an individual effective number towards the target effective number of UCI transmission repetitions, wherein the effective number of each UCI transmission repetition depends on a transmission-effectivity coefficient relating to the component carrier used for performing the respective UCI transmission repetition.

According to a 21st aspect, an integrated circuit is provided, which controls a process of a base station, the process comprising the following steps performed by the base station:

determining a target effective number of transmission repetitions for uplink control information, UCI, to be transmitted by a user equipment using an uplink resource of one of a plurality of component carriers configured for the UE,

determining, for each of the plurality of component carriers, a transmission-effectivity coefficient relating to the respective component carrier usable by the UE for performing the respective UCI transmission repetition,

transmitting, to the UE, information on the determined target effective number of UCI transmission repetitions and information on the determined transmission-effectivity coefficient for each component carrier,

receiving, from the UE, UCI transmission repetitions, respectively via an uplink resource of one of the plurality of component carriers, until the target effective number of UCI transmission repetitions is reached,

wherein each of the received UCI transmission repetitions contributes with an individual effective number towards the target effective number of UCI transmission repetitions, wherein the effective number of each UCI transmission repetition depends on a transmission-effectivity coefficient relating to the component carrier via which the respective UCI transmission repetition is received.

*Further Variants, including Hardware and Software Implementation of the present disclosure*

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC (integrated circuit), a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g. cellular (cell) phone, smart phone), a tablet, a personal computer (PC) (e.g. laptop, desktop, netbook), a camera (e.g. digital still/video camera), a digital player (digital audio/video player), a wearable device (e.g. wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g. an appliance, lighting, smart meter, control panel), a vending machine, and any other "things" in a network of an "Internet of Things (IoT).

The communication may include exchanging data through, for example, a cellular system, a wireless LAN system, a satellite system, etc., and various combinations thereof.

The communication apparatus may comprise a device such as a controller or a sensor, which is coupled to a communication device performing a function of communication described in the present disclosure. For example, the communication apparatus may comprise a controller or a sensor that generates control signals or data signals, which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

(Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

(Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

(Uplink/Downlink/Sidelink)

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

(Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

(Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

(Time Intervals)

In the present disclosure, time resource units are not limited to one or a combination of slots and symbols, and may be time resource units, such as frames, superframes, subframes, slots, time slot subslots, minislots, or time resource units, such as symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the embodiment(s) described above, and may be other numbers of symbols.

(Frequency Bands)

The present disclosure may be applied to any of a licensed band and an unlicensed band.

(Communication)

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

(Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

Further, the various embodiments may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc. It should be further noted that the individual features of the different embodiments may individually or in arbitrary combination be subject matter to another embodiment.

It would be appreciated by a person skilled in the art that numerous variations and/or modifications may be made to the present disclosure as shown in the specific embodiments. The present embodiments are, therefore, to be considered in all respects to be illustrative and not restrictive.

**Claims**

1. A user equipment, UE, comprising:

   processing circuitry, which in operation, determines a target effective number of transmission repetitions for uplink control information, UCI, that is available for transmission,
   a transmitter, which in operation, performs one or more transmission repetitions for the available uplink control information until the target effective number of UCI transmission repetitions is reached, wherein for each transmission repetition of the available uplink control information,

      • the processing circuitry, when in operation, determines one component carrier of a plurality of component carriers configured for the UE and determines an uplink resource of the determined component carrier, and
      • the transmitter, when in operation, transmits the available uplink control information using the determined uplink resource of the determined component carrier,

   wherein each of the performed UCI transmission repetitions contributes with an individual effective number towards the target effective number of UCI transmission repetitions,
   wherein the effective number of each UCI transmission repetition depends on a transmission-effectivity coefficient relating to the component carrier used for performing the respective UCI transmission repetition.

2. The UE according to claim 1, wherein the processing circuitry, when in operation, determines whether or not to perform a transmission repetition of the available uplink control information, based on whether the target effective number of transmission repetitions is reached by past transmission repetitions of the available uplink control information,
   optionally wherein the processing circuitry performs a determination as to whether or not to perform a transmission repetition of the uplink control information by:

      • determining a current effective number of transmission repetitions of the uplink control information, by adding the individual effective number of each of the past transmission repetitions of the available uplink control information,
      • comparing the determined current effective number of UCI transmission repetitions against the target effective number of UCI transmission repetitions,
      • determining to perform an UCI transmission repetition, in case the determined current effective number of UCI transmission repetitions is smaller than the target effective number of UCI transmission repetitions.

3. The UE according to any one of claims 1 to 2, wherein the processing circuitry performs the determination of the target effective number of UCI transmission repetitions:

      • in case the uplink control information is feedback information of a re-transmission protocol relating to a downlink transmission, based on information included in a resource scheduling message, scheduling the downlink transmission, or based on information included in a semi-persistent downlink resource configuration, usable for the downlink transmission, and
      • in case the uplink control information is a scheduling request, SR, based on information included in an SR configuration,
      • in case the uplink control information is channel state information, CSI, based on information included in a CSI configuration.

4. The UE according to any one of claims 1 to 3,

   wherein the transmission-effectivity coefficient of a component carrier is a value indicating a relative transmission effectivity for an uplink transmission over said component carrier, relative to another relative transmission effectivity for an uplink transmission over a reference component carrier, optionally wherein the reference component carrier is one of a primary carrier, a secondary carrier, a carrier with a lowest sub-carrier spacing, and a carrier with a highest sub-carrier spacing,

optionally wherein the transmission effectivity relates to one or more of a transmission reliability of the uplink transmission, a receiver signal quality for receiving an uplink transmission at a base station, a transmission power used by the UE for an uplink transmission over the component carrier,

optionally wherein a receiver of the UE, when in operation, receives information on the transmission-effectivity coefficients for the plurality of component carriers from a base station serving the UE, optionally in a message of a Radio Resource Control, RRC, protocol, and wherein the processing circuitry, when in operation, determines the transmission-effectivity coefficient of a component carrier from the received information.

5. The UE according to any one of claims 1 to 4, wherein the UE is configured with a semi-statically-configured parameter indicating a number of transmission repetitions of uplink control information for a component carrier, to be used by the UE when performing transmission repetitions using only one component carrier,

wherein the processing circuitry, when in operation, determines the transmission-effectivity coefficient of a component carrier to be inversely proportional to the value indicated by the semi-statically configured parameter of the respective component carrier,

optionally wherein the semi-statically-configured parameter is a different parameter than the target effective number of UCI transmission repetitions, and

optionally wherein a receiver of the UE, when in operation, receives a resource scheduling message, including a dynamically-configured parameter indicating the number of transmission repetitions of uplink control information relating to the resource scheduling message, to be used by the UE when performing transmission repetitions using only one component carrier instead of the semi-statically-configured parameter, wherein the processing circuitry, when in operation, determines the target effective number of UCI transmission repetitions to be equal to the dynamically-configured parameter.

6. The UE according to any one of claims 1 to 5, wherein the processing circuitry, when in operation, determines a timing for an UCI transmission repetition, considering a time requirement according to which an UCI transmission repetition over a first component carrier subsequent to a previous UCI transmission repetition over a second, different, component carrier requires a minimum time gap in between,

optionally wherein a receiver of the UE, when in operation, receives information on the time requirement from a base station serving the UE, optionally in a message of a Radio Resource Control, RRC, protocol, and optionally wherein the time requirement is part of a capability of the UE , and the transmitter, when in operation, transmits information on the time requirement to a base station serving the UE,

optionally wherein the time requirement applies commonly to the plurality of component carriers configured for the UE or the time requirement applies to one of the plurality of component carriers.

7. The UE according to any one of claims 1 to 6, wherein the processing circuitry performs the determination of the component carrier for transmission of the uplink control information:

• by determining an uplink timing for transmission of the UCI, determining a reference time slot of a reference component carrier corresponding to the determined uplink timing, and then determining a component carrier for transmission of the UCI, based on an uplink carrier timing pattern and the determined reference time slot,

∘ optionally wherein the uplink carrier timing pattern defines a pattern of one component carrier per reference time slot, such that each time slot of the reference component carrier is associated with one component carrier, among the plurality of component carriers configured for the UE, or

• based on a component carrier indication relating to a downlink transmission, for which feedback information of a re-transmission protocol is to be transmitted as the uplink control information,

∘ optionally wherein the component carrier indication is included in a resource scheduling message, which is received from a base station serving the UE and which schedules the downlink transmission, or is indicated by a semi-persistent downlink configuration usable for the downlink transmission,

optionally wherein the determined component carrier for transmitting the uplink control information can be a different component carrier among the plurality of component carriers depending on the timing of transmitting the uplink control information, and optionally wherein the determined component carrier can be a different component carrier than a component carrier via which the UE has received a downlink transmission for which feedback information of a re-transmission protocol is to be transmitted as the uplink control information.

8. The UE according to any one of claims 1 to 7, wherein - for a first UCI transmission repetition in a series of UCI transmission repetitions - the processing circuitry performs the determination of the uplink resource of the determined component carrier, based on the determined component carrier, based on an uplink resource indication and based on a first association between different uplink resource indications and different uplink resources of one or more component carriers among the plurality of component carriers configured for the UE,

wherein a second association is applicable to any subsequent UCI transmission repetition in the series of UCI transmission repetitions and associates different uplink resources usable for the first-in-a-series UCI transmission repetition with different uplink resources of one or more component carriers among the plurality of component carriers configured for the UE, and wherein - for any of the subsequent-in-a-series UCI transmission repetitions - the processing circuitry performs the determination of the uplink resource of the determined component carrier based on the second association, based on the uplink resource used for the first-in-a-series UCI transmission repetition, and based on the determined component carrier,
optionally wherein the uplink resource indication is included in a resource scheduling message, which is received from a base station serving the UE and which schedules a downlink transmission for which feedback information of a re-transmission protocol is to be transmitted as the uplink control information, or wherein the uplink resource indication is indicated by a semi-persistent downlink configuration usable for the downlink transmission.

9. A method comprising the following steps performed by a user equipment, UE:

determining a target effective number of transmission repetitions for uplink control information, UCI, that is available for transmission,
performing one or more transmission repetitions for the available uplink control information until the target effective number of UCI transmission repetitions is reached,
wherein each transmission repetition of the available uplink control information includes:

• determining one component carrier of a plurality of component carriers configured for the UE and determining an uplink resource of the determined component carrier, and
• transmitting the available uplink control information using the determined uplink resource of the determined component carrier,

wherein each of the performed UCI transmission repetitions contributes with an individual effective number towards the target effective number of UCI transmission repetitions, wherein the effective number of each UCI transmission repetition depends on a transmission-effectivity coefficient relating to the component carrier used for performing the respective UCI transmission repetition.

10. A base station comprising:

processing circuitry, which in operation, determines a target effective number of transmission repetitions for uplink control information, UCI, to be transmitted by a user equipment using an uplink resource of one of a plurality of component carriers configured for the UE,
the processing circuitry, which in operation, determines, for each of the plurality of component carriers, a transmission-effectivity coefficient relating to the respective component carrier usable by the UE for performing the respective UCI transmission repetition,
a transmitter, which in operation, transmits, to the UE, information on the determined target effective number of UCI transmission repetitions and information on the determined transmission-effectivity coefficient for each component carrier,
a receiver, which in operation, receives, from the UE, UCI transmission repetitions, respectively via an uplink resource of one of the plurality of component carriers, until the target effective number of UCI transmission repetitions is reached,

wherein each of the received UCI transmission repetitions contributes with an individual effective number towards the target effective number of UCI transmission repetitions, wherein the effective number of each UCI transmission repetition depends on a transmission-effectivity coefficient relating to the component carrier via which the respective UCI transmission repetition is received.

11. The base station according to claim 10, wherein the processing circuitry, when in operation, determines whether or not a transmission repetition of the available uplink control information will be received from the UE, based on whether the target effective number of transmission repetitions is reached by past received transmission repetitions of the available uplink control information,

    optionally wherein the processing circuitry performs a determination as to whether or not a UCI transmission repetition is received by:

        • determining a current effective number of transmission repetitions of the uplink control information, by adding the individual effective number of each of the past received transmission repetitions of the available uplink control information,
        • comparing the determined current effective number of received UCI transmission repetitions against the target effective number of UCI transmission repetitions,
        • determining that an UCI transmission repetition will be received, in case the determined current effective number of UCI transmission repetitions is smaller than the target effective number of UCI transmission repetitions.

12. The base station according to any one of claims 10 and 11, wherein the transmitter performs the transmission of the information on the target effective number of UCI transmission repetitions:

        • in case the uplink control information is feedback information of a re-transmission protocol relating to a downlink transmission, in a resource scheduling message, scheduling the downlink transmission, or in a semi-persistent downlink resource configuration, usable for the downlink transmission, and
        • in case the uplink control information is a scheduling request, SR, in an SR configuration,
        • in case the uplink control information is channel state information, CSI, in a CSI configuration.

13. The base station according to any one of claims 10 to 12, wherein the transmission-effectivity coefficient of a component carrier is a value indicating a relative transmission effectivity for an uplink transmission over said component carrier, relative to another relative transmission effectivity for an uplink transmission over a reference component carrier, optionally wherein the reference component carrier is one of a primary carrier, a secondary carrier, a carrier with a lowest sub-carrier spacing, and a carrier with a highest sub-carrier spacing,
optionally wherein the processing circuitry, when in operation, determines the transmission effectivity based on one or more of a transmission reliability of the uplink transmission, a receiver signal quality for receiving an uplink transmission, a transmission power used by the UE for an uplink transmission over the component carrier.

14. The base station according to any one of claims 10 to 13, wherein the processing circuitry, when in operation, determines a timing for an UCI transmission repetition of the UE, considering a time requirement according to which an UCI transmission repetition over a first component carrier subsequent to a previous UCI transmission repetition over a second, different, component carrier requires a minimum time gap in between,

    optionally wherein the processing circuitry, when in operation, determines the time requirement, and the transmitter, when in operation, transmits information on the time requirement to the UE, optionally in a message of a Radio Resource Control, RRC, protocol, and
    optionally wherein the receiver, when in operation, receives information on the time requirement from the UE, indicated as part of a capability of the UE,
    optionally wherein the time requirement applies commonly to the plurality of component carriers configured for the UE or the time requirement applies to one of the plurality of component carriers.

15. The base station according to any one of claims 10 to 14, wherein the processing circuitry, when in operation, determines a first association between different uplink resource indications and different uplink resources of one or more component carriers among the plurality of component carriers configured for the UE, and the transmitter, when in operation, transmits information on the first association to the UE,

    wherein the processing circuitry, when in operation, determines one specific uplink resource indicator, from the different uplink resource indications of the first association, and the corresponding uplink resource for a first UCI transmission repetition in a series of UCI transmission repetitions to be performed by the UE, and the transmitter, when in operation, transmits the specific uplink resource indicator to the UE,

wherein the processing circuitry, when in operation, determines a second association that is applicable to any subsequent UCI transmission repetition in the series of UCI transmission repetitions to be performed by the UE, wherein the second association associates different uplink resources usable for the first-in-a-series UCI transmission repetition with different uplink resources of one or more component carriers among the plurality of component carriers configured for the UE, and

the processing circuitry, when in operation, determines - for any of the subsequent-in-a-series UCI transmission repetitions - the uplink resource of the determined component carrier based on the second association, based on the uplink resource used by the UE for the first-in-a-series UCI transmission repetition, and based on the determined component carrier,

optionally wherein the specific uplink resource indication is included in a resource scheduling message, which is transmitted by the base station to the UE and which schedules a downlink transmission for which feedback information of a re-transmission protocol is to be transmitted by the UE as the uplink control information, or wherein the uplink resource indication is indicated by a semi-persistent downlink configuration usable for the downlink transmission.

**Fig. 1**

**Fig. 2**

**Fig. 3**

**Enhanced Mobile Broadband**

Gigabytes in a second

3D video, UHD screens

Work and play in the cloud

Smart Home/Building

Augmented reality

Mission critical application e.g. e-health

Smart City

Industry automation

Self Driving Car

**Massive Machine Type Communication**

**Ultra-reliable and Low Latency Communication**

Fig. 4

| NSSF | NEF | NRF | PCF | UDM | AF |

Nnssf  Nnef  Nnrf  Npcf  Nudm  Naf

Nausf  Namf  Nsmf

| AUSF | AMF | SMF |

Fig. 5

N1  N2  N4

| UE | (R)AN | UPF | DN |

N3  N6

N9

Fig. 6

Fig. 7

slots | n | n+1 | n+2 | n+3 | n+4 | n+5 | n+6

CC

PDSCH

HARQ feedback

K1=1

no UL slot available

Nr. Rep. = 4

repetition #1

repetition #2

repetition #3

repetition #4

UL slot

DL slot

PUCCH resource

PDSCH

**Fig. 8**

slots | n | n+1 | n+2 | n+3 | n+4 | n+5 | n+6

reference CC#0

PDSCH | PDSCH | PDSCH | | PDSCH | PDSCH | PDSCH

SCS = 15 kHz

CC#1

SCS = 15 kHz

CC#2

SCS = 30 kHz

CC#3

SCS = 60 kHz

CC#1 | CC#1 | CC#3 | CC#2 | CC#2 | CC#1 | CC#1

semi-static PUCCH CC timing pattern

DL slot

UL slot

PDSCH

PUCCH resource

**Fig. 9**

43

**Fig. 10**

**Fig. 11**

UE Start

↓

determine a target effective number of UCI transmission repetitions

↓

perform one or more UCI transmission repetitions
until the target effective number of UCI transmission repetitions is reached

determine one component carrier and an uplink resource
of the determined component carrier

↓

transmit UCI using the determined uplink resource
of the determined component carrier

↓

determine individual effective number of each UCI transmission
repetition, contributing towards the target effective number

↓

target effective
number
reached?  — No

↓ Yes

End

## Fig. 12

determination circuitry of target
effective number of UCI repetitions

uplink resource
determination circuitry

determination circuitry of a
transmission-efficivity coefficient

receiver of
UCI transmission repetitions

determination circuitry of an
individual effective number of a received UCI transmission repetition

base station

## Fig. 13

```
┌─────────────────┐
│   base station  │
│     Start       │
└─────────────────┘
        │
        ▼
┌─────────────────────────────────────────────────────────────────────┐
│   determine a target effective number of UCI transmission repetitions │
└─────────────────────────────────────────────────────────────────────┘
        │
        ▼
┌─────────────────────────────────────────────────────────────────────┐
│   determine, for each component carrier configured for a UE,          │
│   a transmission-effectivity coefficient                              │
└─────────────────────────────────────────────────────────────────────┘
        │
        ▼
┌─────────────────────────────────────────────────────────────────────┐
│   transmit, to the UE, information on the determined target effective  │
│   number and information on the determined transmission-effectivity    │
│   coefficients                                                         │
└─────────────────────────────────────────────────────────────────────┘
        │
        ▼
┌─────────────────────────────────────────────────────────────────────┐
│   receive, from the UE, the UCI transmission repetitions, respectively │◄──┐
│   via one of the plural component carriers, until the target effective │   │
│   number is reached                                                    │   │
│                                                                        │   │
│   ┌───────────────────────────────────────────────────────┐           │   │
│   │   determine one component carrier and an uplink        │           │   │
│   │   resource of the determined component carrier          │           │   │
│   └───────────────────────────────────────────────────────┘           │   │
│           │                                                            │   │
│           ▼                                                            │   │
│   ┌───────────────────────────────────────────────────────┐           │   │
│   │   receive UCI via the determined uplink resource       │           │   │
│   │   of the determined component carrier                   │           │   │
│   └───────────────────────────────────────────────────────┘           │   │
│           │                                                            │   │
│           ▼                                                            │   │
│   ┌───────────────────────────────────────────────────────┐           │   │
│   │   determine individual effective number of each UCI    │           │   │
│   │   transmission repetition, contributing towards the    │           │   │
│   │   target effective number                              │           │   │
│   └───────────────────────────────────────────────────────┘           │   │
└─────────────────────────────────────────────────────────────────────┘   │
        │                                                                   │
        ▼                                                                   │
     ╱───────────╲        No                                               │
    ╱  target      ╲─────────────────────────────────────────────────────┘
    ╲  effective   ╱
     ╲  number    ╱
      ╲ reached? ╱
        ╲──────╱
        │ Yes
        ▼
┌─────────────────┐
│      End        │
└─────────────────┘
```

Fig. 14

| UE | | gNB |
|---|---|---|
| determine target effective number of transmission repetitions | ← information on target effective number | determine target effective number of transmission repetitions |
| determine transmission-effectivity coefficient for carriers | ← information on transmission-effectivity coefficient | determine transmission-effectivity coefficient for carriers |
| UCI available for transmission | | |
| determine carrier and uplink resource of carrier | | determine carrier and uplink resource of carrier |
| | 1st UCI transmission repetition → | |
| determine individual effective number for 1st UCI repetition | | determine individual effective number for 1st UCI repetition |
| | 2nd UCI transmission repetition → | |
| accumulate individual effective numbers for past UCI repetitions | | accumulate individual effective numbers for past UCI repetitions |
| | 3rd UCI transmission repetition → | |
| accumulate individual effective numbers for past UCI repetitions | | accumulate individual effective numbers for past UCI repetitions |
| target effective number is reached | | target effective number is reached |

Fig. 15

Fig. 16

Fig. 17

**Fig. 18**

| PRI index | CC#0 | CC#1 |
|-----------|------|------|
| 0 | P00 | P10 |
| 1 | P01 | P11 |

slots
SCS = 15 kHz; TEC=2
SCS = 30 kHz; TEC=1

reference CC#0
CC#1

n    n+1    n+2    n+3    n+4

rep.#1 eff.=2    P00    eff.nr.trx=4 K1=1 PRI=0
eff.=1 rep.#2    P10
eff.=1 rep.#3    P10

semi-static PUCCH CC timing pattern

CC#1    CC#0    CC#1    CC#1    CC#0

□ PUCCH resource
■ PDSCH
▨ UL slot
▦ DL slot
▩ PDSCH

**Fig. 19**

| PRI index | CC#0 | CC#1 | PUCCH resource of initial transmission | PUCCH resource for remaining transmissions |
|-----------|------|------|----------------------------------------|---------------------------------------------|
| 0 | P00 | P10 | P00, P10 | {P01, P11} |
| 1 | P01 | P11 | P01, P11 | {P02, P12} |

slots
SCS = 15 kHz; TEC=2
SCS = 30 kHz; TEC=1

reference CC#0
CC#1

n    n+1    n+2    n+3    n+4

rep.#1 eff.=2    P00    eff.nr.trx=4 K1=1 PRI=0
eff.=1 rep.#2    P11
eff.=1 rep.#3    P11

semi-static PUCCH CC timing pattern

CC#1    CC#0    CC#1    CC#1    CC#0

□ PUCCH resource
■ PDSCH
▨ UL slot
▦ DL slot
▩ PDSCH

50

Fig. 20

| PRI index | CC#0 | CC#1 |
|-----------|------|------|
| 0 | P00 | P10 |
| 1 | P01 | P11 |
| 2 | P02 | --- |

| PUCCH resource of initial transmission | PUCCH resource for remaining transmissions |
|---|---|
| P00 | {P00, P10} |
| P10 | {P01, P11} |
| P02 | {P01} |

EP 4 170 946 A1

| PRI index | CC#0 | CC#1 |
|-----------|------|------|
| 0 | P00 | P10 |
| 1 | P01 | P11 |
| 2 | P02 | --- |
| 3 | P03 | --- |

| PUCCH resource of initial transmission | PUCCH resource for remaining transmissions |
|----------------------------------------|--------------------------------------------|
| P00 | {P00, P10} |
| P10 | {P01, P11} |
| P02 | {P01} |
| P03 | {P10} |

Fig. 21

| n | n+1 | n+2 | n+3 | n+4 | n+5 | slots |

reference CC#0 — PDSCH — eff.=1 — SCS = 15 kHz; TEC=1

SPS: eff.nr.trx=4
K1=1

min. time gap

min. time gap

rep.#3
min. time gap

CC#1 — SCS = 60 kHz; TEC=1

eff.=1 rep.#1

eff.=1 rep.#2

eff.=1 rep.#4

| CC#1 | CC#1 | CC#1 | CC#0 | CC#0 | CC#1 | semi-static PUCCH CC timing pattern |

DL slot    UL slot    PDSCH    PUCCH resource

Fig. 22

## EUROPEAN SEARCH REPORT

Application Number

EP 21 20 4297

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 614 605 A1 (HUAWEI TECH CO LTD [CN]) 26 February 2020 (2020-02-26) | 1-5,9-13 | INV. H04L1/08 |
| A | * paragraphs [0065] – [0075]; figure 2 * | 6-8,14, 15 | H04L5/00 |
| | ----- | | |
| A | WO 2017/135887 A1 (ERICSSON TELEFON AB L M [SE]) 10 August 2017 (2017-08-10) * page 20, line 18 – page 22, line 9; figure 3 * | 1-15 | |
| | ----- | | |

TECHNICAL FIELDS SEARCHED (IPC)

H04L
H04W

The present search report has been drawn up for all claims

| Place of search | Date of completion of the search | Examiner |
|---|---|---|
| The Hague | 14 April 2022 | Marjanovic, Djordje |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 21 20 4297

This annex lists the patent family members relating to the patent documents cited in the above-mentioned European search report.
The members are as contained in the European Patent Office EDP file on
The European Patent Office is in no way liable for these particulars which are merely given for the purpose of information.

14-04-2022

| Patent document cited in search report | | Publication date | Patent family member(s) | | Publication date |
|---|---|---|---|---|---|
| EP 3614605 | A1 | 26-02-2020 | CN | 108809589 A | 13-11-2018 |
| | | | EP | 3614605 A1 | 26-02-2020 |
| | | | US | 2020077384 A1 | 05-03-2020 |
| | | | WO | 2018202145 A1 | 08-11-2018 |
| WO 2017135887 | A1 | 10-08-2017 | CN | 108886435 A | 23-11-2018 |
| | | | EP | 3411976 A1 | 12-12-2018 |
| | | | US | 2019045552 A1 | 07-02-2019 |
| | | | WO | 2017135887 A1 | 10-08-2017 |

EPO FORM P0459

For more details about this annex : see Official Journal of the European Patent Office, No. 12/82